(19) Europäisches Patentamt
European Patent Office
Office européen des brevets

(11) **EP 1 526 775 B1**

(12) **FASCICULE DE BREVET EUROPEEN**

(45) Date de publication et mention
de la délivrance du brevet:
**07.06.2006 Bulletin 2006/23**

(51) Int Cl.:
*A21D 13/08* (2006.01)    *A23L 1/29* (2006.01)
*A23L 1/30* (2006.01)    *A23L 1/10* (2006.01)
*A23K 1/18* (2006.01)

(21) Numéro de dépôt: **03760039.2**

(22) Date de dépôt: **13.06.2003**

(86) Numéro de dépôt international:
**PCT/FR2003/001806**

(87) Numéro de publication internationale:
**WO 2003/105593 (24.12.2003 Gazette 2003/52)**

(54) **PRODUIT DE BISCUITERIE PERMETTANT D'AMELIORER LA PREVENTION NUTRITIONNELLE DES EFFETS DELETERES LIES AU STRESS OXYDATIF**

BACKWAREN ZUR VERMINDERUNG VON OXIDATIVEM STRESS

BISCUIT PRODUCT THAT CAN BE USED TO IMPROVE NUTRITIONAL PREVENTION OF THE HARMFUL EFFECTS ASSOCIATED WITH OXIDATIVE STRESS

(84) Etats contractants désignés:
**AT BE BG CH CY CZ DE DK EE ES FI FR GB GR HU IE IT LI LU MC NL PT RO SE SI SK TR**

(30) Priorité: **14.06.2002 FR 0207410**

(43) Date de publication de la demande:
**04.05.2005 Bulletin 2005/18**

(73) Titulaire: **COMPAGNIE GERVAIS DANONE**
**92300 Levallois Perret (FR)**

(72) Inventeurs:
• **BOUCHARD, Camille**
**F-77380 Combs la Ville (FR)**
• **GAUSSERES, Nicolas**
**F-75015 Paris (FR)**
• **JIMENEZ, Liliana**
**F-91190 GIF SUR YVETTE (FR)**
• **ATTAL, Fabienne**
**F-91200 Athis Monsllant (FR)**
• **BONNOT, Isabelle**
**F-75015 Paris (FR)**
• **NOTARDONATO, Lélia**
**F-91200 Athis Mons (FR)**
• **ROCHER, Patrick**
**F-44000 Nantes (FR)**

(74) Mandataire: **Boulinguiez, Didier**
**Cabinet Plasseraud**
**65/67 rue de la Victoire**
**75440 Paris Cedex 09 (FR)**

(56) Documents cités:
**GB-A- 357 223**    **US-A- 5 200 218**

• **DATABASE BIOSIS [Online] BIOSCIENCES INFORMATION SERVICE, PHILADELPHIA, PA, US; juin 2000 (2000-06), VAN STUIJVENBERG M E ET AL: "South African experience with the use of red palm oil to improve the vitamin A status of primary schoolchildren." XP002232661 Database accession no. PREV200000378469 & FOOD AND NUTRITION BULLETIN, vol. 21, no. 2, juin 2000 (2000-06), pages 212-214, ISSN: 0379-5721**
• **DATABASE BIOSIS [Online] BIOSCIENCES INFORMATION SERVICE, PHILADELPHIA, PA, US; 1997, PARK H ET AL: "Fortifying bread with a mixture of wheat fiber and psyllium husk fiber plus three antioxidants." XP002232656 Database accession no. PREV199799609532 & CEREAL CHEMISTRY, vol. 74, no. 3, 1997, pages 207-211, ISSN: 0009-0352**
• **DATABASE BIOSIS [Online] BIOSCIENCES INFORMATION SERVICE, PHILADELPHIA, PA, US; octobre 1997 (1997-10), MELTZER HELLE M ET AL: "Supplementary selenium influences the response to fatty acid-induced oxidative stress in humans." XP002232657 Database accession no. PREV199800034786 & BIOLOGICAL TRACE ELEMENT RESEARCH, vol. 60, no. 1-2, octobre 1997 (1997-10), pages 51-68, ISSN: 0163-4984**

**Description**

L'invention a pour objet un produit de biscuiterie permettant d'optimiser les apports nutritionnels en micro-nutriments anti-oxydants et par ce biais d'améliorer la prévention nutritionnelle des effets délétères liés au stress oxydatif et du déclin des fonctions cognitive et immunitaire. Elle concerne également le procédé de fabrication de ce produit de biscuiterie, ainsi que l'utilisation de ce dernier afin d'améliorer la résistance de l'organisme au stress oxydatif, plus particulièrement chez l'être humain.

Au sens de la présente invention, on entend par le terme de produit de biscuiterie tout type de produit contenant de la farine de céréales, un produit sucrant, de la matière grasse et éventuellement des oeufs, et ayant subi un traitement de cuisson. Ce terme regroupe notamment les biscuits proprement dits, qu'ils soient secs, salés ou sucrés, les pâtisseries ou gâteaux ayant subi un traitement de cuisson, les madeleines, les boudoirs, les gaufrettes, les snacks, etc.

De nombreuses recherches effectuées au cours de ces dernières années ont montré que de faibles apports en certaines vitamines et minéraux, ou un statut biologique précaire en ces micro-nutriments, pourraient constituer des facteurs de risque d'apparition de certaines maladies, telles le cancer, l'athérosclérose, la cataracte et le déclin du système immunitaire et des capacités cognitives (aujourd'hui appelées maladies dégénératives) (voir notamment HUGHES K, CHOO M, KUPERAN P, ONG CN, Aw TC. "Cardiovascular risk factors in relation to cigarette smoking: a population-based survey among Asians in Singapore", *Atherosclerosis,* 1998;137:253-8 ; LORIA CM, KLAG MJ, CAULFIELD LE, WHELTON PK. "Vitamin C status and mortality in US adults", *The American journal of clinical nutrition,* 2000; 72:139-45 ; SALONEN JT, SALONEN R, LAPPETELÄINEN R, MÄENPÄÄ PH, ALFTHAN G, PUSKA P. "Risk of cancer in relation to serum concentrations of selenium and vitamins A and E: matched case-control analysis of prospective data.", *British medical journal* 1985;290:417-20; SALONEN JT, ALFTHAN G, HUTTUNEN JK, PUSKA P. "Association between serum selenium and the risk of cancer", *American journal of epidemiology* 1984;120:342-9).

Les micronutriments les plus souvent associés aux maladies précitées sont les micronutriments antioxydants. Le mécanisme par lequel les antioxydants protègent l'organisme contre ces maladies est principalement leur action contre les radicaux libres et une restauration des fonctions du système immunitaire.

Les radicaux libres ont deux origines différentes. Ils peuvent provenir soit d'une source exogène, liée à l'environnement (polluants environnementaux, fumée de cigarette, rayonnements ionisants, prise de certains médicaments, anesthésiants et solvants industriels, ozone, ...), soit d'une source endogène car, paradoxalement, l'organisme produit lui-même des radicaux libres lors des processus physiologiques normaux. En effet, l'organisme a un besoin impératif d'oxygène pour le fonctionnement de ses organes. Mais une très faible partie de l'oxygène que nous respirons aboutit, au niveau cellulaire, à la production de radicaux libres oxygénés. En permanence, au niveau de chaque mitochondrie, quelques pour cent de l'oxygène moléculaire $O_2$ "échappent" à la réduction en eau et forment des radicaux superoxyde $O_2^{-o}$. D'autre part, ils sont également produits lors de l'activation des cellules immunitaires, car les radicaux libres jouent un rôle essentiel dans la destruction des bactéries et la défense de l'organisme.

Une production accrue ou non-contrôlée de radicaux libres entraîne des effets négatifs. Ces radicaux sont des espèces chimiques présentant un ou plusieurs électrons non appariés, qui sont donc très réactives car cherchant à s'apparier avec d'autres molécules. Ceci a pour conséquence de déstabiliser les molécules voisines et d'entraîner une réaction en chaîne aboutissant à des destructions au niveau cellulaire. Ainsi, par exemple, les produits engendrés peuvent modifier la structure physique des composants de la cellule comme les lipides, constituants essentiels des membranes cellulaires, les brins d'acide nucléique, altérer la fonction des protéines, et entraîner la glycation des sucres. Les radicaux libres oxygénés seraient ainsi responsables d'environ 10000 modifications de base au niveau de l'ADN par cellule et par jour .

L'attaque radicalaire des lipides entraîne une perte d'instauration des acides gras poly-insaturés membranaires, à l'origine d'une diminution de la fluidité des membranes. De la même façon, l'oxydation de certaines lipoprotéines (les LDL notamment), est considérée comme une étape importante de l'athérogènèse.

L'oxydation des protéines entraîne une oxydation de groupements -thiol qui sont impliqués dans des nombreuses fonctions protéiques et enzymatiques. L'oxydation modifie également certains acides aminés, conduisant à la formation de groupements carbonyle qui s'accumulent avec l'âge. Une oxydation des protéines du cristallin est à l'origine de la cataracte.

L'oxydation des glucides intervient également au cours de la formation des produits terminaux de la glycation protéique (Advanced Glycosylated End products = AGE). Les AGE s'accumulent au niveau des protéines à durée de vie longue, entraînant notamment une perte d'élasticité tissulaire, comme au niveau des vaisseaux sanguins et du cristallin et pourraient ainsi participer au vieillissement.

Les radicaux libres, en modifiant les acides nucléiques, dénaturent également l'ADN et entraînent des cassures chromosomiques. Ainsi, les réactions d'oxydation de l'ADN qui sont ubiquitaires sont impliquées dans la mutagénèse, la carcinogenèse, le vieillissement et la mortalité cellulaire

L'organisme possède un système de défense antioxydante qui neutralise les radicaux libres oxygénés (Radical Oxygen Species = ROS) après leur production. Il est aisé de concevoir qu'une partie d'une telle quantité de dommages échappe cependant aux systèmes de réparation, même les plus performants.

En cas de rupture d'équilibre de cette balance entre composés anti-oxydants et pro-oxydants, par exemple lorsque le système de défense antioxydante se déplète ou devient insuffisant pour contrecarrer la production de radicaux libres, un déséquilibre appelé "stress oxydatif" s'installe, ayant pour conséquence des dommages importants au niveau cellulaire.

Le stress oxydatif est donc l'un des facteurs associés à la physiopathologie des maladies dégénératives.

Des apports insuffisants en vitamines et minéraux antioxydants seraient ainsi susceptibles de favoriser l'apparition du stress oxydatif. En effet, un faible statut en antioxydants diminue les capacités de défense de l'organisme contre les agressions des radicaux libres de l'oxygène et augmente le risque de développement de certains cancers, des maladies cardiovasculaires et d'autres maladies dégénératives.

Plusieurs points importants ressortent des études épidémiologiques :

■ des apports alimentaires insuffisants, et/ou un statut biologique marginal en vitamines et en oligo-éléments anti-oxydants, sont associés à une plus forte incidence de pathologies dégénératives.

■ chez les sujets ayant les apports alimentaires les plus élevés en antioxydants, les études d'observation mettent en évidence un effet protecteur contre le risque d'apparition de cancers ou de maladies cardiovasculaires.

■ il a également été observé, lors des études épidémiologiques, qu'il existe une corrélation significative entre un faible statut en micronutriments antioxydants et le déclin cognitif des personnes âgées. Il a particulièrement été montré que les sujets avec un apport faible en β-carotène et vitamine E étaient les sujets présentant le stress oxydatif le plus élevé (voir l'étude EVA : BERR C, RICHARD MJ, ROUSSEL AM, BONITHON KC. "Systemic oxidative stress and cognitive performance in the population-based EVA study". Etude du Vieillissement Artériel, Free radical biology & medicine 1998;24:1202-8). L'étude POLA (Delcourt C, Cristol JP, Tessier F, Léger CL, Descomps B, Papoz L. "Age-related macular degeneration and antioxidant status in the POLA study". POLA Study Group. Pathologies Oculaires Liées à l'Age. Archives.117:1384-90) a montré une incidence plus faible des maladies oculaires en fonction du statut biologique en vitamines E, C et caroténoïdes.

Des études d'intervention ont été réalisées afin de montrer un effet causal de certains antioxydants vis-à-vis de la protection contre ces maladies (voir notamment HERCBERG S, PREZIOSI P, BRIANÇON S ET AL. "A primary prevention trial using nutritional doses of antioxidant vitamins and minerals in cardiovascular diseases and cancers in a general population: the SU.VI.MAX study--design, methods, and participant characteristics". SUpplementation en VItamines et Minéraux AntioXydants. Controlled clinical trials 1998;19:336-51 ; CLARK LC, DALKIN B, KRONGRAD A ET AL. "Decreased incidence of prostate cancer with selenium supplementation: results of a double-blind cancer prevention trial". British journal of urology 1998;81:730-4 ; LEPPÄLÄ JM, VIRTAMO J, FOGELHOLM R, ALBANES D, TAYLOR PR, HEINONEN OP. "Vitamin E and Beta carotene supplementation in High risk for stroke- a sub group analysis of the ATBC cancer prevention study". Arch.Neurology 2001;57:1503-9 ; et BLOT WJ. "Nutrition intervention trials in Linxian, Chinaø: supplementation with specific vitamin/mineral combinations, cancer incidence, and disease- specific mortality in the general population". Journal of the National.Cancer Institute.;-1492). Les résultats sont cependant contradictoires. Par exemple, l'étude chinoise LINXIAN (BLOT WJ, LI J, TAYLOR PR, GUO W, DAWSEY SM, LI B. "The Linxian trials: mortality rates by vitamin-mineral intervention group", American.-1426S), qui a utilisé une combinaison d'antioxydants à des "doses supra-nutritionnelles" : 15 mg de β-carotène, 30 mg de vitamine E et 50 μg de sélénium par jour chez des sujets ayant des faibles apports alimentaires, a montré une réduction de 13 % de la mortalité par cancer et de 9 % de la mortalité globale chez les sujets supplémentés. En revanche, deux études d'intervention ("The effect of vitamin E and beta carotene on the incidence of lung cancer and other cancers in male smokers", The Alpha-Tocopherol, Beta Carotene Cancer Prevention Study Group. The.330:1029-35 ; et OMENN GS, GOODMAN GE, THORNQUIST MD ET AL. "Risk factors for lung cancer and for intervention effects in CARET", the Beta-Carotene and Retinol Efficacy Trial. Journal-1559), avec des doses pharmacologiques en β-carotène (20 mg/j et 30 mg/j respectivement), ont montré des résultats négatifs. En effet, les fortes doses en β-carotène ont augmenté l'apparition de cancer du poumon de 18 % et 28 % pour ATBC et CARET respectivement. Les taux sanguins en β-carotène montraient une augmentation, après quelques années de supplémentation, entre 12 et 18 fois les taux initiaux (avant supplémentation). Il faut cependant prendre en compte que ces deux études montrant des résultats négatifs ont été faites chez des gros fumeurs (plus de 20 cigarettes par jour) ou des sujets exposé à l'amiante ayant un forte risque de cancer du poumon.

L'accumulation des données épidémiologiques et mécanistiques suggère que les antioxydants pourraient agir de façon complémentaire et synergique et que des quantités nutritionnelles suffiraient à procurer un effet bénéfique sur la santé.

C'est dans ce contexte, et dans le cadre d'une prévention nutritionnelle des effets liés au stress oxydant, et du déclin de la fonction cognitive et immunitaire, que la Société Demanderesse s'est attachée à mettre au point un produit céréalier combinant un très bon équilibre nutritionnel et une répartition optimale en plusieurs micro-nutriments sélectionnés, choisis comme étant la vitamine C, la vitamine E, le β-carotène, le zinc et le sélénium, la consommation journalière d'une ration d'environ 25-30 g de ce produit contribuant à optimiser les apports alimentaires des consommateurs en éléments anti-oxydants, et à l'atteinte des apports nutritionnels conseillés (ANC) dans ces éléments.

Ce produit céréalier est un produit de biscuiterie qui est caractérisé par le fait qu'il comprend à la fois de la farine complète de blé, du germe de blé, de la vitamine C, de la vitamine E, du β-carotène, du zinc et du sélénium.

Conformément à l'invention, ce produit de biscuiterie comprend, les quantités étant exprimées par rapport à 100 g de produit fini :

- une quantité supérieure ou égale à 5 g, de préférence à 5.5 g, et plus préférentiellement encore à 6 g de farine complète de blé,
- une quantité supérieure ou égale à 5 g, de préférence à 5.5 g, et plus préférentiellement encore à 6 g de germe de blé,
- de 70 à 200, de préférence de 75 à 175, et plus préférentiellement encore de 85 à 135 mg de vitamine C,
- de 8 à 40, de préférence de 10 à 30, et plus préférentiellement encore de 14 à 22 mg de vitamine E,
- de 1.5 à 8 mg, de préférence de 2 à 6, et plus préférentiellement encore de 2,6 à 4,8 mg de β-carotène,
- de 30 à 100, de préférence de 40 à 80, et plus préférentiellement encore de 44 à 82 μg de sélénium,
- et de 4 à 25, de préférence de 6 à 20, et plus préférentiellement encore de 7 à 15 mg de zinc.

Selon un mode de réalisation préférentiel, le produit de biscuiterie conforme à l'invention comprend une teneur en matières grasses choisie de façon à ce que l'apport énergétique desdites matières grasses soit inférieur à 35 %, et de préférence compris entre 25 et 35 % de l'apport énergétique total du produit.

Le produit de biscuiterie selon l'invention peut se présenter soit sous la forme d'un produit sec, soit sous la forme d'un produit aux fruits. Lorsqu'il s'agit d'un produit sec, la teneur en matières grasses est de préférence choisie de façon à ce que le rapport énergétique soit compris entre 30 et 35 % de l'apport énergétique total du produit et, lorsqu'il s'agit d'un produit de biscuiterie aux fruits, la teneur en matières grasses est sélectionnée de façon à ce que le rapport énergétique soit de préférence compris entre 25 et 30 % de l'apport énergétique total du produit.

Selon une réalisation préférentielle de l'invention, le produit de biscuiterie selon l'invention comprend une quantité de fibres supérieure ou égale à 6 g, de préférence supérieure à 6.5 g, et plus préférentiellement encore supérieure à 7 g, cette quantité étant exprimée pour 100 g de produit fini.

De même, le produit comprend de préférence une teneur en céréales supérieure ou égale à 50 % pour les produits secs et supérieure ou égale à 30 % pour les produits aux fruits, ces pourcentages étant exprimés en poids sur le produit fini.

Avantageusement, les matières grasses sont sélectionnées de façon à ce que les acides gras saturés représentent une proportion inférieure ou égale à 30 % du total des lipides, les acides gras mono-insaturés représentent une proportion supérieure ou égale à 50 % des lipides, et les acides gras poly-insaturés représentent une proportion inférieure ou égale à 20 % des lipides présents dans le produit fini.

Préférentiellement, les matières grasses sont sélectionnées de façon à ce que, dans les acides gras polyinsaturés, la proportion d'acides gras essentiels présente un rapport $\dfrac{\omega 6}{\omega 3} \leq 5$, que la teneur en acides gras trans soit au niveau de trace, et qu'elles soient exemptes de matières grasses hydrogénées.

De préférence également, le ratio amidon sur sucres est supérieur ou égal à 1 pour les produits de biscuiterie secs, et supérieur ou égal à 0.45 pour les produits aux fruits.

Grâce à la sélection et au respect des caractéristiques précitées, le produit de biscuiterie conforme à l'invention présente la garantie d'un excellent niveau nutritionnel, assure l'obtention d'une performance organoleptique élevée, et permet d'assurer une synergie d'action contre les effets du stress oxydatif tout en évitant toute toxicité.

Les formes de micro-nutriments anti-oxydants qui ont été sélectionnées pour la fabrication du produit de biscuiterie conforme à l'invention sont compatibles avec le niveau organoleptique visé, se conservent pendant la durée de vie dudit produit (c'est-à-dire pendant une durée supérieure à 6 mois) et sont de plus biodisponibles, ainsi que l'ont mis en évidence les études chez le rat.

En terme d'organoleptie, plusieurs problèmes devaient être résolus : l'obtention d'une texture satisfaisante et celle d'un goût acceptable, en dépit de l'incorporation des antioxydants, cette incorporation ayant un impact assez fort sur le goût des produits.

En ce qui concerne la texture, il faut souligner que la qualité et la quantité des matières grasses utilisées est loin d'être indifférente. Les produits conformes à l'invention présentent ainsi une teneur en matières grasses significativement inférieure à celle des produits de biscuiterie de même catégorie existant sur le marché. Par exemple, alors que la teneur moyenne en matières grasses des produits chocolatés du marché est d'environ 21 %, la teneur moyenne en matières grasses d'un produit chocolaté selon l'invention est réduite d'un pourcentage d'au moins 15 %, c'est-à-dire qu'elle est inférieure à 18 % sur le produit fini, et plus généralement voisine de 16-17 %. De même, alors que la teneur moyenne en matières grasses des produits aux fruits présents sur le marché est d'environ 10.5 % (valeur établie en effectuant la moyenne des teneurs en matières grasses de 13 produits aux fruits) la teneur moyenne en matières grasses d'un produit aux fruits conforme à l'invention est au moins réduite d'un pourcentage de 10 %, c'est-à-dire qu'elle est le plus souvent inférieure à 9.50 % sur le produit fini, et plus généralement voisine de 8.5 % à 9.2 %. Cette réduction de la quantité de matières grasses entraîne, dans la technique de coextrusion, des pâtes moins souples, plus sujettes aux déchirements lors du façonnage, et ayant davantage tendance au dessèchement en cours d'utilisation. Pour la technologie de fabrication des produits de biscuiterie secs, cette réduction de la teneur en matières grasses entraîne l'apparition de pâtes moins souples, ayant tendance à coller au cylindre de façonnage ou aux toiles de dépose.

Par ailleurs, la texture d'un produit réalisé avec une huile est très différente de celle d'un produit de biscuiterie fabriqué avec une matière grasse concrète : la texture des pâtes est en effet plus molle, les pâtes sont de ce fait moins machinables, et les produits finis peuvent présenter une croustillance moins élevée. La stabilité des produits finis peut en outre être réduite, du fait notamment du risque d'oxydation des matières grasses qui est accru du fait de l'utilisation d'huiles.

L'observance d'un ratio amidon/sucre supérieur ou égal à 1 pour les produits de biscuiterie secs, et supérieur ou égal à 0.45 pour les produits aux fruits, est également extrêmement contraignant en ce qui concerne la texture et la qualité organoleptique des produits de biscuiterie. C'est le cas en particulier pour les produits coextrudés aux fruits, où le fourrage apporte l'essentiel du sucre de la recette. En effet, le fourrage fruits doit présenter des caractéristiques d'Aw (water activity) spécifiques pour ne pas réhumidifier le produit après cuisson. Des produits standard, réalisés par la même technologie, présentent plutôt des ratios amidon/sucre proche de 0.3. L'atteinte de ratios supérieurs à 0.45 est donc difficile, car la réduction du taux de sucre dans la recette se fait presque uniquement dans la pâte. Cette réduction est de plus source de difficultés de machinabilité de la pâte (augmentation du collant) et de réduction de la croustillance des produits finis.

L'enrichissement en fibres des produits est également complexe. En effet, les produits de biscuiterie conformes à l'invention présentent une teneur en fibres de loin supérieure (multiplication par un facteur de 2 à 3) à celle des produits équivalents, c'est-à-dire des produits de même technologie, présents sur le marché. Les fibres insolubles captent ainsi de façon préférentielle l'eau de mouillage des pâtes et sont de ce fait un facteur de durcissement, de "séchage" de la texture des pâtes, rendant celles-ci plus difficiles à travailler au façonnage (pâtes qui s'émiettent, produits déformés ou incomplets), entraînant un fort impact sur la densification de la texture des produits finis.

Enfin, le fait que les produits conformes à l'invention présentent une teneur céréales élevée (teneur typiquement voisine de 55 % pour les produits secs et de 35 % pour les produits coextrudés, à comparer à celle des biscuits secs conventionnels qui est plutôt de 40 % de céréales, et à celle des produits coextrudés conventionnels qui est d'environ 20 %) a également une forte influence sur la texture des produits finis, ceux-ci ayant tendance à devenir plus denses, et donc moins agréables à consommer.

Il s'avère que tous ces problèmes ont pu être résolus grâce à la présente invention, du fait du choix très particulier de la quantité et de la qualité des macro- et des micro-nutriments. Grâce à l'utilisation de farine complète et de germes de blé, au choix des matières grasses utilisées et à la teneur élevée en fibres, les produits de biscuiterie conformes à l'invention présentent une texture et un goût agréables, ont une excellente qualité nutritionnelle et permettent d'assurer une stabilité optimale pendant plusieurs mois.

Les produits de biscuiterie conformes à l'invention peuvent se présenter par exemple sous la forme de madeleines, de bâtonnets, de barquettes, de dimensions généralement comprises entre 20 et 100 mm, d'épaisseur généralement comprise entre 2 et 90 mm, et d'un poids généralement compris entre 5 et 15 g. Ils peuvent comporter un fourrage ou un revêtement, des pépites de chocolat ou de fruits, un dorage et un décor. Ils sont préférentiellement conditionnés dans des sachets contenant de 1 à 5 unités, représentant une dose recommandée, et ayant un poids total de 20 à 40 g environ.

Une consommation régulière du produit de biscuiterie conforme à l'invention permet d'améliorer efficacement la résistance de l'organisme contre le stress oxydatif tout en garantissant une parfaite innocuité et tout en contribuant à un bon équilibre de l'alimentation. En d'autres termes, l'invention permet d'apporter un bénéfice santé face au risque oxydatif sans occasionner de risques liés au surdosage.

Il est en effet connu que la consommation de produits antioxydants, si elle est bénéfique à certaines doses, peut en revanche s'avérer néfaste à d'autres concentrations. Les antioxydants sont à cet égard, tout comme les radicaux libres, des composés ambigus et il a été démontré que de fortes doses d'antioxydants pouvaient avoir un effet prooxydant et donc entraîner des effets antagonistes. Ainsi, de fortes doses d'antioxydants peuvent avoir des effets délétères sur les mécanismes de défense cellulaire (GALAN, P. et al., Antioxydants et Prévention - Cah. Nutr. Diét. 32,6:359-369 (1997)).

D'autre part, si les antioxydants protègent contre les effets négatifs des radicaux libres, la production normale de radicaux libres est aussi utile au niveau cellulaire (rôle antibactérien, signalisation cellulaire entre autres). Un juste équilibre est donc nécessaire entre les oxydants et les antioxydants et il est du mérite de la Société Demanderesse d'avoir réussi à déterminer la nature et la teneur des antioxydants et oligo-éléments assurant un tel équilibre.

**EP 1 526 775 B1**

Même en se plaçant dans le cas extrême où les plus gros consommateurs de biscuits (c'est-à-dire, en ce qui concerne l'Europe, les Français dans la tranche d'âge de 12 à 19 ans) ne consommeraient que les biscuits selon l'invention, ce serait l'équivalent de 4 doses d'environ 30 g qui seraient ingérées chaque jour (la quantité de biscuits consommée dans la tranche d'âge de 12 à 19 ans est en moyenne d'environ 70 g par jour en Europe et d'environ 120 g par jour en France), et il est important de souligner que cette ingestion quotidienne de 4 doses de produit selon l'invention apporterait une quantité de micro-nutriments antioxydants qui respecterait encore l'équilibre précité.

Le procédé de fabrication du produit de biscuiterie conforme à l'invention comprend les étapes suivantes : sélection des ingrédients, mélange desdits ingrédients, en une ou plusieurs opérations, notamment dans un pétrin, jusqu'à obtention d'une pâte de texture et de viscosité adaptées, façonnage du produit, notamment par moulage à la rotative, découpe au roto-découpoir après laminage, extrusion, co-extrusion, coulage de la pâte sur bande pleine ou dans des moules de cuisson, cuisson, refroidissement et emballage, et il est caractérisé par le fait que l'on fait comprendre, ou que l'on ajoute auxdits ingrédients, de la farine complète de blé, du germe de blé, de la vitamine C, de la vitamine E, du β-carotène, du sélénium et du zinc, de façon à ce que le produit fini contienne les quantités indiquées en chacun de ces produits.

De préférence, la farine complète de blé, les germes de blé, les vitamines et les minéraux que constituent le zinc et le sélénium sont ajoutés de façon fractionnée au cours du processus de fabrication. Ce fractionnement de l'incorporation de ces quatre fractions a en effet permis de réduire significativement l'apparition de mauvais arrière-goûts.

Lors de la fabrication de produits coextrudés, il a ainsi été défini qu'il était préférable d'incorporer le mélange de vitamines et de minéraux dans le fourrage, la farine complète et les germes de blé restant dans la pâte.

En ce qui concerne le zinc, ce minéral peut conférer au produit un goût astringent. Par ailleurs, il doit être biodisponible dans le produit fini. Pour définir la forme biodisponible la plus neutre en termes de goût, de très nombreuses recettes ont été réalisées et testées et des test triangulaires ont été effectués entre un biscuit neutre témoin sans ajout de zinc, et avec divers essais réalisés à partir d'un biscuit de même recette supplémenté en zinc sous différentes formes chimiques : gluconate de zinc, oxyde de zinc, mélange gluconate/oxyde de zinc, fraction de blé naturellement riche en zinc, zinc encapsulé. Ces différents tests ont permis de montrer que l'option préférentielle était d'ajouter le zinc sous forme d'oxyde.

En ce qui concerne le β-carotène, celui-ci comporte le désavantage d'apporter une note aromatique de légume (carotte) aux produits auxquels il est ajouté. De plus, il les colore. Après plusieurs essais, il a été déterminé qu'il était préférable d'apporter le β-carotène sous forme de β-carotène encapsulé dans un support de gélatine.

Les techniques de biscuiterie conventionnelles peuvent être mises en oeuvre dans le procédé conforme à l'invention :

- biscuits secs classiques réalisés par découpe après laminage ou par moulage à la rotative, avec ou sans inclusions dans la pâte,
- biscuits salés,
- crackers,
- biscuits dressés sur bande pleine ou dans des moules (tuiles, langues de chat, boudoirs, ...),
- gaufrettes,
- pâtisseries : pâtes molles nature ou aromatisées, avec ou sans inclusions, ou fourrées (cakes, madeleines, ...).

La cuisson est extrêmement importante pour les produits de biscuiterie-pâtisserie, car c'est d'elle que dépendent le goût, l'aspect définitif et la conservation des produits fabriqués. Les profils de cuisson utilisés présentent des caractéristiques différentes selon les produits réalisés : cinétique d'élévation de température, courbe de température, durée de cuisson, ... De préférence, on utilise pour les produits conformes à l'invention des fours tunnels à chauffage mixte (pour partie directe, pour partie indirecte), ou indirecte, avec dans ce cas la possibilité de conserver ou non les buées pour la cuisson.

L'invention pourra être mieux comprise à l'aide des exemples qui suivent, qui sont donnés à titre purement illustratif.

**EXEMPLE 1 :**

**1.1. Procédés de fabrication**

Deux types de biscuits sont fabriqués : un biscuit sec avec des pépites de chocolat ou de fruits, et un biscuit fourré aux fruits. Les procédés utilisés pour la fabrication de ces biscuits, qui font appel à des technologies classiquement utilisées en biscuiterie, sont indiqués ci-après.

**1.2. Biscuits secs aux pépites :**

a) Recettes :

**Tableau 1**

| COMPOSITION DU PRODUIT FINI | |
|---|---|
| | % mis en oeuvre dans le produit fini |
| Pâte | 96 |
| Décor | 2 |
| Dorage | 2 |
| **TOTAL PRODUIT FINI** | **100.00** |
| | |
| **Ingrédients** | **% mis en oeuvre dans le produit fini** |
| PATE | |
| Huile de Colza | 10.5 |
| Farine de froment | 41 |
| Farine de seigle | 2.5 |
| Farine complète de froment | 5 |
| Germes de blé | 5 |
| Son de blé | 1. 7 |
| Fibres de blé | 1 |
| Saccharose | 15 |
| Eau | 6 |
| Lécithine de soja, émulsifiant | QSP |
| Poudres levantes ( Bicarbonate de sodium , Bicarbonate d'ammonium, Phosphate monocalcique ), Bicarbonate d'ammonium | 1 |
| Sel | 0.4 |
| Arôme | 0.6 |
| Chunks de chocolat aérés | 20.5 |
| Oxyde de zinc | 0.015 |
| Levures séléniées | 0.028 |
| Vitamine E (à 67%) | 0.025 |
| Vitamine C | 0.200 |
| Carotène (à 10%) | 0.087 |
| DECOR | |
| Blé concassé stabilisé précuit | 2.2 |

Suite de tableau

| DORAGE (Composition dorure) | |
|---|---|
| Eau | 66 |
| Lait entier en poudre | 33 |
| Bicarbonate de sodium | 1 |

b) Pétrissage :

Le pétrissage est effectué en 3 phases : une première étape de crémage classique, puis un ajout de toutes les matières premières pulvérulentes, et finalement l'addition des pépites de chocolat ou de fruits.

La température finale souhaitée est dans tous les cas inférieure à 25°C pour ne pas entraîner de fonte ou d'écrasement du chocolat dans la rotative, et surtout d'éviter une exposition des nutriments anti-oxydants à la chaleur. Le temps de repos est variable de 30 à 60 minutes selon la consistance de la pâte.

Les chunks chocolat utilisés sont aérés et sont fabriqués conformément à l'enseignement du brevet WO 02/13618 déposé par la Société Demanderesse. Réalisés à partir d'un chocolat liquide contenant 25 % de matière grasse seulement, leur densité est réduite de 30 % par rapport à un produit classique. Cela a le double avantage de diminuer la quantité de lipides apportées par le chocolat (en effet, le produit fini ne doit contenir qu'un maximum de 35 % de calories lipidiques), mais aussi et surtout de renforcer l'intensité du goût en bouche (fonte plus rapide des pépites légères et aérées, donc meilleure libération des arômes).

c) Façonnage :

Les biscuits sont moulés à la rotative, grâce à un cylindre à empreintes téflonnées.

Après découpe, les biscuits sont dorés, à la fois pour assurer le collage des particules sur le biscuit, et pour conserver sa brillance malgré le saupoudrage du décor. Le dorage est appliqué en relativement grandes quantités (> 2 % du poids total).

Puis un décor de blé concassé est déposé à la surface du biscuit. Ce décor est constitué d'un mélange céréalier permettant de donner un aspect agréable au produit fini. La dépose du décor se fait sur une bande grillagée afin de récupérer l'excédent (objectif: 2 % du poids total).

d) Cuisson :

La cuisson sur bande Z a lieu dans un four mixte (direct en voûte et indirect en sole). Le temps de cuisson est de 7 à 9 minutes. La courbe de cuisson est définie pour limiter la destruction du mélange anti-oxidant durant la cuisson et également pour atteindre un niveau d'humidité résiduelle des biscuits en sortie de four permettant de conserver ces anti-oxydants pendant le durée de vie du produit. En effet, certaines vitamines sont thermolabiles, et pourraient être détruites par une cuisson brutale et prolongée.

Ce taux d'humidité résiduelle des biscuits sortie four est de 2 à 4 % maximum.

**1.3. Biscuits secs aux pépites de chocolat non aérées :**

On fabrique un biscuit selon l'exemple précédent 1.2 mais en remplaçant les pépites (chunks) de chocolat aérées par une masse égale de pépites de chocolat non aérées. La composition du chocolat est identique à celle du chocolat contenant les chunks aérés.

**1.4. Biscuits coextrudés aux fruits :**

a) Recettes :

**Tableau 2**

| COMPOSITION DU PRODUIT FINI | |
|---|---|
| | **% mis en oeuvre dans le produit fini** |
| Pâte | 48 |
| Fourrage | 50 |
| Décor | 1.8 |
| Dorage | 0.2 |
| **TOTAL PRODUIT FINI** | **100.00** |
| | |
| **Ingrédients** | **% mis en oeuvre dans le produit fini** |
| **PATE** | |
| Mélange d'huiles végétales (dont colza 50%, et palme 50%) | 8 |
| Farine de froment | 18.38 |
| Farine complète de froment | 4.95 |
| Germes de blé | 4.95 |
| Saccharose | 10 |
| Fructo-oligo-saccharides (de marque Actilight... commercialisés par Beghin Say...) | 3.5 |
| Eau | 7 |
| Lécithine de soja et émulsifiant | QSP |
| Poudres levantes ( Bicarbonate de sodium Bicarbonate d'ammonium ) | 0.2 |
| Sel | 0.3 |
| Arôme | 0.2 |
| **FOURRAGE** | |
| Fourrage fruits rouges | 53 |
| Oxyde de zinc | 0.02 |
| Levures séléniées | 0.07 |
| Vitamine E (à 67%) | 0.03 |
| Vitamine C | 0.32 |
| Carotène (à 10%) | 0.14 |
| **DECOR** | |
| Blé concassé stabilisé précuit | 1.7 |
| **DORAGE** (Composition dorure) | |
| Eau | 82,5 |
| Saccharose | 3,75 |
| Lait entier en poudre | 2,5 |

Suite de tableau

| **DORAGE** (Composition dorure) | |
|---|---|
| OEufs entiers en poudre | 11,25 |

b) <u>Pétrissage</u> :

Il est effectué en plusieurs phases :

1. crémage des matières grasses et du sucre,
2. ajout des matières premières liquides,
3. ajout des matières premières pulvérulentes.

La température de la pâte en fin de pétrissage doit être inférieure à 20°C. Il est possible de refroidir la pâte par addition d'azote si nécessaire.
La pâte est fabriquée en batchs de taille moyenne, car elle évolue très vite (tendance à devenir dure et cassante)

c) <u>Façonnage</u> :

Les produits sont façonnés sur une coextrudeuse de type RHEON.
La coextrusion consiste à extruder de façon simultanée 2 pâtes ou une pâte et un fourrage au travers de 2 douilles concentriques qui forment une tête d'extrusion.
Ainsi, on réalise un tube de pâte ou de fourrage inclus dans un tube de pâte, de telle manière qu'après process les 2 composants restent distincts visuellement.
La tête d'extrusion est alimentée en pâte ou en fourrage par des vis sans fin.
En sortie de la tête d'extrusion, le boudin de pâte fourré ainsi formé, est coupé en pâtons à la longueur souhaitée avec une guillotine (les extrémités restant dans ce cas « ouvertes »). Les pâtons peuvent également être refermés aux extrémités, soit par écrasement de l'extrémité, soit grâce à un iris.
Les réglages utilisés sont les suivants :

- Ratio pâte / fourrage : pâte de 45 à 55 % - fourrage de 45 à 50 %
- Les pâtons sont découpés à la guillotine

Après façonnage, les pâtons sont dorés, avec une dorure spécifique qui permet d'assurer à la fois la bonne adhésion du décor et la brillance des biscuits finis. Le poids de dorure pour 10 biscuits crus est de 1 à 3 g.
Après dorage, les biscuits sont décorés avec un décor constitué d'un mélange céréalier permettant de donner un aspect agréable au produit fini. Ce décor participe à l'atteinte du taux de céréales et de fibres des produits finis.
Les vitamines et minéraux sont ajoutés en totalité dans le fourrage, afin d'éviter toute dérive organoleptique et afin d'assurer une conservation optimale de leur teneur dans le temps. Leur ajout dans le fourrage place en effet les vitamines et minéraux dans les meilleures conditions : à l'abri de l'air, chauffage moins intense lors de la cuisson, pH optimum.
La composition du fourrage est choisie de façon à assurer une activité de l'eau (Aw) optimale, à la fois pour obtenir une texture croustillante des produits, et pour garantir la stabilité des vitamines et minéraux dans le temps.
La texture du produit fini est effectivement directement corrélée à l'activité de l'eau du fourrage. Plus son Aw est élevée, plus la texture du produit fini est molle et pâteuse, ce qui va à l'encontre du but recherché qui est d'obtenir une texture croustillante. Par ailleurs, il est essentiel que ce fourrage résiste à la cuisson, pour éviter les déformations des produits finis (étalement excessif, éclatement, ...) et débordement de fourrage lors de la cuisson.

d) <u>Cuisson</u> :

Cuisson dans un four à gaz indirect à bande pleine, temps de cuisson entre 8 et 11 mn.
La courbe de cuisson a été conçue pour ménager la conservation des antioxydants.
L'humidité résiduelle des biscuits en sortie de four est de 11% mini à 12 % maxi.
Les micronutriments antioxydants utilisés dans ces exemples sont les suivants :

Vitamine C :

Fournisseur : BASF
Teneur en acide L-ascorbique supérieure ou égale à 99 %

Vitamine E

Covitol® F-1000-2 (concentré de D-$\alpha$ tocophérol)
Huile visqueuse de couleur ambrée, d'une teneur en D-$\alpha$ tocophérol supérieure ou égale à 67 %.

$\beta$-carotène

$\beta$-carotène 10 % B de la Société ROCHE, se présentant sous la forme d'une poudre granulaire fine de couleur rouge brun. Les particules individuelles contiennent le $\beta$-carotène finement dispersé dans une matrice de gélatine, fructose et glycérine.
Teneur en $\beta$-carotène supérieure ou égale à 10 %

Zinc

Gluconate de zinc Gluconal® ZN de la Société AVEBE, se présentant sous la forme d'une poudre blanchâtre, d'une teneur en zinc de 12.3 à 14.6 %.

Sélénium

Levure séléniée de marque MEY SE 2000, commercialisée par la Société LALLEMAND, se présentant sous la forme d'une poudre beige clair, d'une teneur en sélénium comprise entre 20 et 24 %.
En fonction des contraintes règlementaires, on pourrait substituer à la levure séléniée de la séléniométhionine ou de la sélénite ou toute autre forme de sélénium assurant une biodisponibilité équivalente.

**1.5. Caractéristiques nutritionnelles des produits finis**

Les caractéristiques nutritionnelles des produits finis (pour 100 g de produit) sont indiquées dans le tableau 3 ci-après.

**Tableau 3**

| | Biscuits aux pépites de chocolat (valeurs pour 100 g) | Biscuits coextrudés aux fruits (valeurs pour 100 g) |
|---|---|---|
| Énergie (Kcal) | 440 | 365 |
| Protides (g) | 7,5 | 4,0 |
| Glucides (g) | 64 | 66 |
| dont sucres dont amidon (g) | 29 34,7 | 40 18,5 |
| Lipides (g) | 17 | 9,0 |
| dont acides gras saturés (g) | 4,1 | 2,4 |
| Fibres alimentaires Dont FOS | 6,6 0 | 6,6 2,8 |
| Vitamine A ($\beta$-carotène) | 3333 $\mu$g (soit 69 % des AJR) | 4000 $\mu$g (soit 83 % des AJR) |
| Vitamine E | 16,7 mg (soit 167 % des AJR) | 20 mg (soit 200 % des AJR) |

Suite de tableau

|  | Biscuits aux pépites de chocolat (valeurs pour 100 g) | Biscuits coextrudés aux fruits (valeurs pour 100 g) |
|---|---|---|
| Vitamine C | 100 mg (soit 166% des AJR) | 120 mg (soit 200% des AJR) |
| Zinc | 10 mg (soit 66 % des AJR) | 12 mg (soit 80 % des AJR ) |
| Sélénium Sélénium | 56,7 µg (soit 81% des AJR ) | 68 µg (soit 97 % des AJR ) |

## EXEMPLE 2 : Évaluation *in vitro* de la capacité antioxydante des biscuits

La mesure de la capacité antioxydante est une analyse globale qui ne détermine pas de façon spécifique la nature des antioxydants concernés mais qui reflète l'activité des molécules présentes vis à vis d'une source des radicaux.

Chimiquement, la capacité antioxydante d'une molécule correspond à sa capacité à inhiber ou à retarder l'oxydation d'une molécule cible soumise à une attaque radicalaire. Pour exprimer les résultats de l'analyse, on compare le temps et/ou le degré d'inhibition des réactions radicalaires provoquées par le composant étudié avec ceux d'un antioxydant référence. En général, la forme hydrosoluble de la vitamine E (Trolox) est prise comme référence.

La capacité antioxydante *in vitro* d'un aliment n'est pas toujours significativement corrélée à la capacité antioxydante du plasma après consommation de cet aliment (capacité antioxydante *in vivo).* En effet, les molécules d'antioxydants contenues dans les aliments possèdent des taux et des vitesses d'absorption différents. De plus, lors de l'absorption, ces molécules peuvent changer leur forme chimique et donc leur capacité antioxydante. Cependant, quelques auteurs ont trouvé que la capacité antioxydante du plasma augmentait en fonction de la capacité antioxydante de l'alimentation après plusieurs jours.

### 2.1. Méthodologie

La capacité antioxydante des biscuits a été mesurée in vitro par la méthode ORAC (Oxygen Radical Antioxidant Capacity).

La méthode ORAC mesure dans le temps la perte d'intensité de fluorescence de la fluorescéine en présence de radicaux peroxyle et ce jusqu'à disparition totale de la fluorescence. La présence de composés antioxydants dans l'échantillon inhibe l'action oxydante des radicaux libres envers la sonde fluorescente, et le calcul de l'aire sous la courbe (AUC) par rapport à un blanc permet donc la détermination quantitative relative de la capacité antioxydante de ces composés envers les radicaux libres. Cette technique de calcul informe sur deux paramètres indicateurs de la capacité antioxydante : le temps d'inhibition et le pourcentage d'inhibition de l'activité oxydante des radicaux libres en présence d'antioxydants.

$$\text{Capacité antioxydante} = \text{AUC}_{\text{antioxydant}} - \text{AUC}_{\text{blanc}}$$

$$\text{Valeur ORAC relative} = [(\text{AUC}_{\text{éch.}} - \text{AUC}_{\text{blanc}}) / (\text{AUC}_{\text{std}} - \text{AUC}_{\text{blanc}})] \times (\text{molarité std} / \text{molarité éch.})$$

Cette formule s'applique généralement pour l'analyse de composés antioxydants purs de molarités connues. Dans le cas des biscuits selon l'invention, le paramètre molarité (mole/L) est remplacé par des valeurs exprimées en g/L. La valeur ORAC finale est alors exprimée en µmol de Trolox (c'est-à-dire en Équivalents de Trolox, ou TE) par gramme de matière sèche.

Cette méthode est sensible, fiable et robuste. Elle est reproductible dans le temps avec un coefficient de variation inférieur à 15 %, une limite de détection basse équivalente à 5 µM et une limite de quantification de 12.5 µM. C'est à dire que des valeurs de capacité antioxydante supérieures à 12.5 µmole TE/g sont complètement fiables. En revanche, des valeurs entre 5 et 12.5 sont quantifiables mais moins fiables, et des très faibles valeurs, inférieures à 5 µmole TE/g, ne pourront pas être quantifiées par cette méthode.

## 2.2 Échantillons analysés

Les 4 produits suivants ont été analysés :

Produits                                                                   Description

**A** : Croustillants pépites de chocolat selon l'exemple 1.2, sans les antioxydants (vitamines E, C, β-carotène + sélénium + zinc) et sans germe de blé ni farine complète.

**B** : Croustillants pépites de chocolat selon l'exemple 1.2.

**C** : Biscuits fourrés aux fruits rouges sans les antioxydants cités ci-dessus, ni germe de blé ni farine complète.

**D** : Biscuits fourrés aux fruits rouges selon l'exemple 1.4.

**E** : Croustillants pépites de chocolat non aérées selon l'exemple 1.3, sans les antioxydants cités ci-dessus, ni germe de blé ni farine complète.

**F** : Croustillants pépites de chocolat non aérées selon l'exemple 1.3.

## 2.3. Résultats et discussion

La capacité antioxydante des produits augmente avec l'addition du complexe d'antioxydants utilisé conformément à l'invention comme l'indique les résultats ci-dessous.

**Tableau 4**

| Produits testés | Capacité antioxydante des biscuits ORAC ($\mu$mole TE/g) |
|:---:|:---:|
| **A** | 13.1 |
| **B** | 24.4 |
| **C** | 14.6 |
| **D** | 24.0 |
| **E** | 60.0 |
| **F** | 72.0 |

La capacité antioxydante des trois biscuits avant l'addition des antioxydants est tout à fait comparable, bien qu'on note une valeur légèrement plus faible pour les croustillants aux pépites de chocolat aérées et plus forte pour les croustillants aux pépites de chocolat non aérées.

Après l'addition du complexe d'antioxydants utilisé conformément à l'invention, la capacité antioxydante augmente de façon similaire pour les deux biscuits: de 11.3 $\pm$ 3.04 $\mu$mol ET pour les croustillants, et de 9.4 $\pm$ 3.78 $\mu$mol ET pour les coextrudés.

Si l'on compare la capacité antioxydante des biscuits avec les fruits, aliments reconnus pour avoir la capacité antioxydante la plus importante (cf. tableau 5 ci-dessous), on observe que les biscuits selon l'invention se situent parmi des fruits tels que la myrtille ou la cerise et le raisin. Par ailleurs, on a mesuré la valeur antioxydante de deux dérivés du blé couramment utilisés, la farine blanche et la farine complète. La capacité antioxydante des biscuits selon l'invention est dans tous les cas beaucoup plus élevée que celle la farine blanche.

**Tableau 5**

| Aliments | ORAC ($\mu$mole TE/g) |
|:---|:---:|
| Myrtille | 85 |
| Fraise | 37 |
| Raisin | 24.5 |
| Croustillants pépites de Chocolat aérées | 24.4 |
| Croustillants pépites de Chocolat non aérées | 72 |
| Fourrés aux fruits | 24 |
| Cerise | 20 |

Suite de tableau

| Aliments | ORAC ($\mu$mole TE/g) |
|---|---|
| Farine complète de blé | 18 |
| Farine blanche | 10 |

Analyses faites par le même laboratoire utilisant la même technique

L'addition du complexe d'antioxydants selon l'invention augmente donc la capacité antioxydante des biscuits. Les données montrent que les antioxydants contenus dans le produit sont actifs après le processus de fabrication et permettent d'assurer une importante activité antioxydante (*in vitro*) des biscuits.

### EXEMPLE 3 : Étude *in vivo* de l'efficacité biologique des produits conformes à l'invention

La vérification a été faite sur des rats que les nutriments antioxydants sélectionnés conformément à l'invention, vitamines E et C, $\beta$-carotène, zinc et sélénium, et contenus dans les biscuits sont biodisponibles. L'absence de toxicité en chronique d'une consommation journalière des biscuits et l'effet de ces régimes sur des paramètres biologiques du stress oxydant ont également été observés.

### 3.1. Méthodologie

60 rats Wistar pris au sevrage, d'un poids moyen de 50 g ont été inclus dans cette étude. Les animaux ont été séparés en trois groupes, nourris *ad libitum* pendant 3 mois avec trois types de régime (cf. tableau 6 ci-dessous) avant sacrifice et analyses.

**Tableau 6**

| Nutriment | Unités | Régime groupe 0 70 % de régime rat + 30 % de biscuits sans antioxydants | Régime groupe 1 70 % de régime rat + 30 % de biscuits aux pépites conformes à l'invention* | Régime groupe 2 70 % de régime rat + 30 % de biscuits avec une dose double en chacun des antioxydants |
|---|---|---|---|---|
| Protéines | g/kg | 156.3 | 156.3 | 156.3 |
| Lipides | g/kg | 80.3 | 80.3 | 80.3 |
| Ac. Gras w3 | g/kg | 4 | 4 | 4 |
| Ac. gras w6 | g/kg | 20.4 | 20.4 | 20.4 |
| Glucides | g/kg | 587.7 | 587.7 | 587.7 |
| Vitamine C | mg/kg | 2.3 | 296 | 560 |
| Vitamine E | mg/kg | 144 | 213 | 257 |
| $\beta$-carotène | mg/kg | 0.3 | 34 | 66.5 |
| Fer | mg/kg | 83.5 | 101.9 | 97.3 |
| Cuivre | mg/kg | 6.5 | 6.7 | 6.7 |
| Zinc | mg/kg | 8.9 | 37.2 | 61.2 |
| Sélénium | $\mu$g/kg | 103 | 247 | 357 |

*contenant : 5 g de germes de blé + 5 g de farine complète + 100 mg de vitamine C + 16.6 mg de vitamine E + 6.66 mg de $\beta$-carotène + 10 mg de zinc + 56.6 $\mu$g de sélénium pour 100 g de biscuit.

### 3.2. Paramètres mesurés

Deux paramètres ont été choisis afin de vérifier la biodisponibilité des nutriments antioxydants :

1. la croissance des animaux
2. le statut biologique (concentrations en antioxydants dans le sang, le plasma et les tissus), puis activité plasmatique et érythrocytaire de la glutathion peroxydase (GPX) pour le statut en sélénium

Pour vérifier l'absence de toxicité, le poids des organes et le statut biologique en fer ont été déterminés (en effet, des données scientifiques ont montré que des doses élevées en zinc pourraient provoquer une diminution du statut en fer).

Pour observer si les régimes avaient un effet sur le stress oxydatif, les marqueurs suivants ont été déterminés :

■ Lipidiques : TBARS, acides gras.
■ Protéiques : groupements thiols (SH)
■ Pouvoir antioxydant du plasma
■ Enzymes antioxydantes glutathion peroxydase (GPX), superoxyde dismutase (SOD) et catalase (CAT).

### 3.3. Analyses statistiques

Les résultats correspondent à la moyenne $\pm$ SD. Les tests utilisés ont été de type paramétrique ou non après vérification de la répartition gaussienne des valeurs. Les analyses statistiques ont été effectuées avec le logiciel Statistica.

Dans la présentation des résultats, les valeurs ne partageant pas la même lettre sont statistiquement différentes.

### 3.4. Résultats

Les résultats de l'étude ont confirmé que les antioxydants vitamine E, vitamine C, zinc et sélénium contenus dans les biscuits sont biodisponibles. En revanche, le modèle animal choisi n'a pas permis de vérifier la biodisponibilité du β-carotène, car le rat est un animal qui convertit immédiatement le β-carotène en rétinol sans que les concentrations plasmatiques en β-carotène soient détectables.

### 3.4.1. Vérification de la biodisponibilité des antioxydants

### 3.4.1.1. Effets sur la croissance des animaux

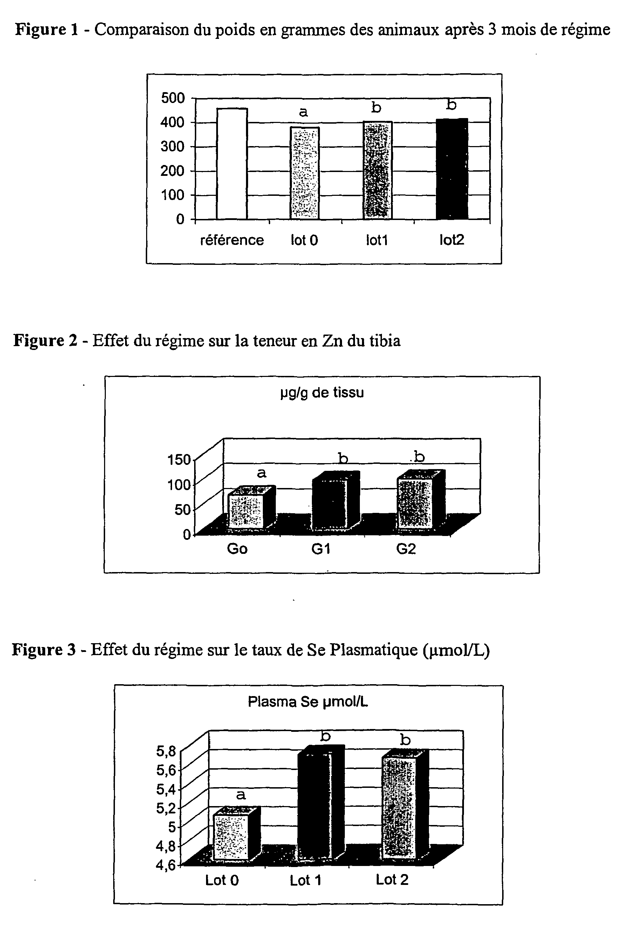

La différence de croissance entre les animaux supplémentés et les animaux du groupe témoin montre l'effet bénéfique des micronutriments sur la croissance et donc leur biodisponibilité. En effet, le poids des animaux, qui ne présentait pas de différence à l'inclusion, se retrouve à la fin de la supplémentation significativement plus élevé chez les animaux des groupes nourris avec un régime riche en antioxydants (1 et 2) par rapport au groupe témoin (groupe 0) (voir Figure 1).

Ces résultats montrent également que les régimes avec une supplémentation en antioxydants ne provoquent pas de surpoids car les poids des animaux des groupes 1 et 2 restent comparables à ceux enregistrés avec un régime de référence.

Ces résultats suggèrent un bénéfice de la supplémentation en cas d'apports subdéficients en micronutriments.

### 3.4.1.2. Effets du régime sur le statut biologique en micronutriments

➢ Le zinc contenu dans les biscuits est biodisponible.

D'après les données scientifiques de la littérature, le marqueur le plus sensible du statut biologique en zinc est sa teneur tissulaire dans le tibia. Les résultats obtenus montrent des différences significatives de statut en Zn entre le groupe d'animaux témoin et ceux recevant un régime enrichi en Zn, et confirment que le zinc apporté dans les lots 1 et 2 est biodisponible (voir Figure 2). En revanche les valeurs plasmatiques ne sont pas significativement différentes.

➢ Les résultats confirment que le sélénium des biscuits est biodisponible

On observe (voir Figure 3) un effet dose dépendant du régime sur le taux plasmatique en Se.

Les teneurs tissulaires en Se confirment également cet effet (cf. tableau 7 ci-dessous)

**Tableau 7**

| Lots | Foie ($\mu$g/g tissu) | Coeur ($\mu$mol/g tissu) | Rein ($\mu$mol/g tissu) |
|---|---|---|---|
| Lot 0 | 0.615[a] | 5.0[a] | 1.0[a] |
| Lot 1 | 0.96[b] | 5.62[b] | 1.39[b] |
| Lot 2 | 1.07[c] | 5.6[b] | 1.38[b] |

Ces résultats mettent en évidence une efficacité des régimes enrichis à augmenter la teneur des fluides biologiques et des tissus en Se. Dans les tissus et le plasma, le taux maximal est atteint avec la première dose d'enrichissement, alors que dans les érythrocytes on observe un effet dose réponse entre le groupe 0 (8 nmol/g Hb), le groupe 1 (10.4 nmol/g Hb) et le groupe 2 (12.8 nmol/g Hb).

➢ La vitamine C est également biodisponible

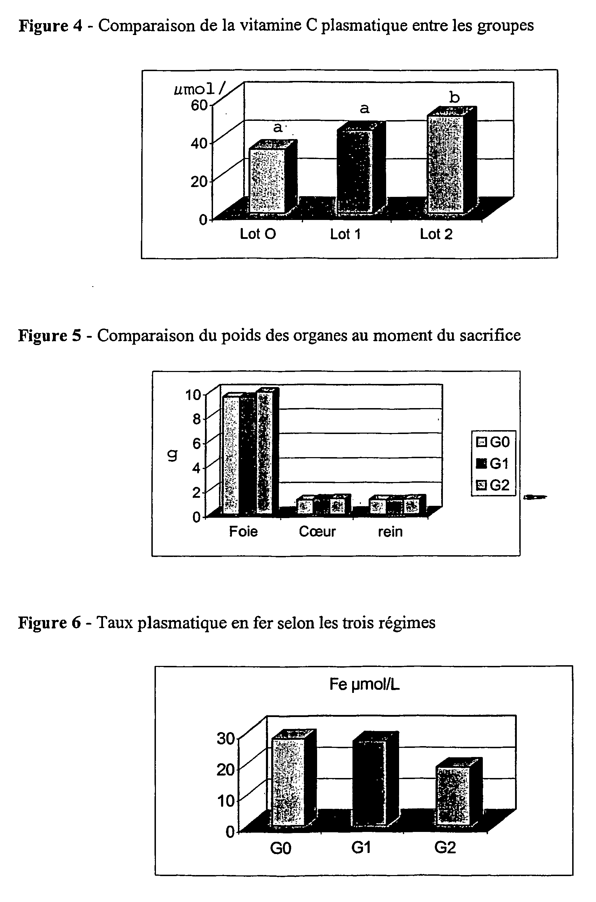

On observe (voir Figure 4) une augmentation du taux plasmatique en vitamine C qui suit l'enrichissement du régime. Même en prenant en compte le fait que le rat est un animal non-vitamine C dépendant, les résultats permettent de mettre en évidence que la vitamine C est biodisponible.

➢ L'effet des régimes sur la vitamine E plasmatique confirment sa biodisponibilité

Le taux de vitamine E est dose dépendant mais la différence est significative entre le groupe 0 et le groupe 2 (cf. tableau 8).

**Tableau 8**

| Lots | Moyennes $\mu$mol/L |
|------|--------------------|
| Lot 0 | 10,46 $\pm$ 5,02 [a] |
| Lot 1 | 13,79 $\pm$5,90 [ab] |
| Lot 2 | 17,67 $\pm$ 6,43 [b] |

### 3.4.2. Vérification de l'absence de toxicité des biscuits

Deux paramètres ont été choisis pour vérifier la non-toxicité des biscuits : le poids des organes et le statut en fer des animaux.

➢ Les poids des organes ne different pas entre les groupes (figure 5). Les régimes n'ont aucun effet délétère de type stéatose chez les rats nourris avec des régimes enrichis.

Il avait été montré que le poids corporel des animaux était significativement plus important chez les rats du groupe 2, cependant cette différence de poids entre les groupes ne se répercute pas sur le poids des organes : les antioxydants du biscuit ne présentent pas d'effets négatifs ou toxiques.

➢ Statut biologique en fer

Le taux plasmatique plus faible en Fe dans le groupe 2, le plus riche en Zn, pourrait être dû à un effet inhibiteur et compétitif du Zn sur l'absorption du Fe, bien documenté dans la littérature (voir Figure 6). Cependant cette baisse du fer n'a pas de répercussion délétère sur le taux d'hémoglobine (tableau 9 ci-dessous).

**Tableau 9**

| | Lot 0 | Lot 1 | Lot 2 |
|---|---|---|---|
| Fer $\mu$mol/L | 27.96 | 21.4 | 35.6 |
| Hb g/l | 33.08 $\pm$ 3.09 | 34.84 $\pm$ 1.74 | 35.71 $\pm$ 4.42 |

### 3.4.3. Modulation des paramètres du stress oxvdatif

L'effet d'un régime enrichi sur les paramètres du stress oxydant a été évalué en dosant l'activité des systèmes enzymatiques de défenses (GPx et SOD) et les marqueurs d'une oxydation lipidique (MDA) et protéiques (groupements SH).

➢ Effet du régime sur l'activité des enzymes antioxydantes

En ce qui concerne les enzymes antioxydantes, seules les GPX sélénodépendantes (à l'exception de la GPX plasmatique) ont été sensibles à la supplémentation en micronutriments. Parmi les enzymes du système de défense antioxydant, la GPX est la plus sensible à un effet du régime. L'activité érythrocytaire, hépatique et cardiaque de cette enzyme est augmentée, ce qui suggère une meilleure protection en cas de stress oxydant. Cet effet est probablement dû à la teneur du régime en Se. Plusieurs travaux dans la littérature décrivent une corrélation entre l'activité de la GPX et le statut en Se. On remarque toutefois l'existence d'une spécificité tissulaire de cette activité. Concernant les activités hépatique et cardiaque, la différence d'activité entre le groupe 1 et le groupe 2 pourrait être due à une interaction spécifique Zn/Se dans les tissus.

Les régimes enrichis en Se entraînent une augmentation de l'activité GPX érythrocytaire.

**Tableau 10**

| Groupe | GPX érythrocytaire (U/g Hb) | GPX plasmatique (U/L) |
|---|---|---|
| Groupe 0 | 386.85 ± 41.26 | 10898 ± 713 |
| Groupe 1 | 541.02 ± 42.42 | 11944 ± 2652 |
| Groupe 2 | 502.22 ± 63.44 | 10151 ± 3419 |

Les animaux recevant un régime enrichi en Se ont une augmentation de l'activité GPX érythrocytaire et hépatique. Cet effet est probablement lié à la teneur en Se des régimes avec biscuits enrichis.

Les enzymes antioxydantes SOD et CAT tissulaires ne sont pas modifiées par les régimes.

Le régime n'a aucun effet sur la peroxydation lipidique des animaux, mesurée par la teneur plasmatique du MDA, ni sur l'oxydation des protéines mise en évidence par l'analyse des groupements thiols.

On n'observe aucun effet néfaste des régimes sur le pouvoir antioxydant du plasma (TAS) ni sur le statut plasmatique du glutathion. Cependant il existe une tendance à la baisse des formes oxydées (GSSG).

**Tableau 11**

| | Lot 0 | Lot 1 | Lot 2 |
|---|---|---|---|
| TAS* mmol/L | 1,02 ± 0,11 | 1,01 ± 0,05 | 0,95 ± 0,15 |
| GSH total $\mu$mol/L | 1067 ± 200 | 953 ± 240 | 974 ± 144 |
| GSSG $\mu$mol/L | 10,57 ± 9,70 | 3,05 ± 4,93 | 4,69 ± 6,84 |
| GSH $\mu$mol/L | 1032 ± 196 | 947 ± 244 | 975 ± 151 |
| *TAS : mesure du pouvoir antioxydant total en présence d'un générateur de radicaux libres | | | |

**Les conclusions suivantes peuvent être tirées de cette étude :**

■ il est confirmé que les antioxydants contenus dans les biscuits conformes à l'invention sont biodisponibles. En effet, les concentrations plasmatiques et tissulaires des antioxydants mesurés augmentent en fonction de la dose utilisée,

■ il est possible d'affirmer qu'il n'y a pas de toxicité chronique des nutriments antioxydants, ni d'effet indésirable entre les minéraux avec les doses utilisées pendant 3 mois consécutifs de supplémentation,

■ les biscuits selon l'invention ne montrent pas d'effet indésirable sur le statut oxydant des animaux. Au contraire, une tendance à la baisse de l'oxydation du glutathion est observée.

**EXEMPLE 4 : Étude de l'effet d'une supplémentation avec des biscuits conformes à l'invention sur des paramètres de la fonction immunitaire, du système antioxydant et du stress oxydatif chez la souris au cours du vieillissement**

L'effet d'un biscuit conforme à l'invention, donc de composition optimisée en antioxydants, a été évalué sur plusieurs paramètres de la fonction immunitaire, de production de ROS (Reactive Oxygen Species) et du stress oxydatif des leucocytes chez un modèle de souris adulte prématurément vieillie (Viveros MP, Fernández B, Guayerbas N, de la FM. : "Behavioral characterization of a mouse model of premature immunosenescence", *Journal of neuroimmunology*, 2001;114:80-8 ; de la FM, Miñano M, Manuel V, V et al. "Relation between exploratory activity and immune function in aged mice: a preliminary study. Mechanisms of ageing and development", 1998;102:263-77), puis chez des souris âgées.

### 4.1. Matériels et méthodes

**Expérimentation 1 : Évaluation de l'effet des biscuits selon l'invention sur des paramètres de la fonction immunitaire, de la production de ROS et du stress oxydatif chez un modèle de souris adulte prématurément vieillie**

**Animaux :**

180 souris femelles OF1 Swiss (Mus musculus) (Harlan Ibérica Spain) âgées de 6 mois ont été présélectionnées pour l'étude. Chaque souris a été marquée à l'arrivée au laboratoire pour être suivie tout au long de l'étude. Les souris ont été placées dans des cages en polyuréthanne à une température constante de $22 \pm 2$ °C et un cycle inverse lumière/obscurité de 12/12 heures. Tous les animaux ont été traités en accord avec les directives 86/6091 EEC de la Communauté Européenne.

**Groupes expérimentaux :**

Les souris ont été classées dans un premier temps en groupes de 60 souris chacun en fonction de leur performance lors de 4 évaluations au test T-shape maze (de la FM, Miñano M, Manuel V, V et al. "Relation between exploratory activity and immune function in aged mice: a preliminary study. Mechanisms of ageing and development", 1998;102:263-77). Ainsi 60 souris ont été classées comme des souris lentes (performance de plus de 10 secondes), 60 souris ont été classées comme rapides (performance de moins de 10 secondes) et les 60 autres n'ont pas été incluses dans cette étude car elles n'ont pas répondu de manière homogène aux 4 évaluations. D'après ce modèle les souris appelées lentes correspondent à des souris prématurément vieillies (PAM - Prematurely-Aging Mice) et les rapides à des non-prématurément vieillies (NPAM - Non Prematurely-Aging Mice). Ainsi 60 souris PAM et 60 souris NPAM ont été subdivisées en 3 groupes pour une supplémentation comme suit :

| 60 NPAM (Non Prematurely-Aging Mice) | 20 Souris Contrôles | NPAM Control |
| | 20 Souris supplémentées avec un régime contenant 5 % de biscuits conformes à l'invention | NPAM 5% |
| | 20 Souris supplémentées avec un régime contenant 20 % de biscuits conformes à l'invention | NPAM 20% |
| 60 PAM (Prematurely-Aging Mice) | 20 Souris Contrôles | PAM Control |
| | 20 Souris supplémentées avec un régime contenant 5 % de biscuits conformes à l'invention | PAM 5% |
| | 20 Souris supplémentées avec un régime contenant 20 % de biscuits conformes à l'invention | PAM 20% |

Les deux niveaux de supplémentation chez la souris ont été choisis en extrapolant la quantité de biscuits consommée chez l'homme en fonction de la quantité de calories apportées. Ainsi, une supplémentation avec 5 % de biscuits selon l'invention chez la souris équivaut à la même proportion de calories apportées par une portion des biscuits par jour chez l'homme (30 g). Une supplémentation de 20 % chez la souris est proportionnelle à l'apport calorique de 3 portions de biscuits selon l'invention par jour chez l'homme.

L'ensemble des régimes administré est décrit dans le tableau 12 ci-dessous.

**Tableau 12 :** Régimes utilisés pour évaluer l'effet des biscuits selon l'invention sur des paramètres de la fonction immunitaire, la production de ROS et le stress oxydatif chez des souris adultes

| Nutriment | Unités | Régime contrôle | Régime avec 5 % biscuits selon l'invention | Régime avec 20 % biscuits selon l'invention |
|---|---|---|---|---|
| | | | | |
| Calories | kcal/kg | 3405,6 | 3464,4 | 3640,7 |
| protéines | g/kg | 120,7 | 118,8 | 113,1 |
| lipides | g/kg | 41,6 | 47,2 | 64,3 |

Suite de tableau

| Nutriment | Unités | Régime contrôle | Régime avec 5 % biscuits selon l'invention | Régime avec 20 % biscuits selon l'invention |
|---|---|---|---|---|
| Omega-3 | g/kg | 0,4 | 1,1 | 3,2 |
| Omega-6 | g/kg | 8,6 | 10,4 | 16,0 |
| non-azoté | g/kg | 637,0 | 640,8 | 652,3 |
| Vitamine A | mg/kg | 1000,0 | 950,0 | 800,0 |
| Thiamine | mg/kg | 5,0 | 4,8 | 4,0 |
| Riboflavine | mg/kg | 6,0 | 5,7 | 4,8 |
| Niacine | mg/kg | 30 | 30,0 | 30.0 |
| Pyridoxine | mg/kg | 6,0 | 5,7 | 4,8 |
| Cobalamine | mg/kg | 25,0 | 23,8 | 20,0 |
| Vitamine C | mg/kg | 0,0 | 171,0 | 684,0 |
| Vitamine E | mg/kg | 23,1 | 33,4 | 64,3 |
| Acide folique | mg/kg | 5,0 | 4,8 | 4,0 |
| β-carotène | mg/kg | 0,0 | 2,3 | 9,1 |
| calcium | mg/kg | 5000,0 | 4759,3 | 4037,1 |
| magnésium | mg/kg | 1000,0 | 972,4 | 889,4 |
| fer | mg/kg | 25,7 | 25,1 | 23,3 |
| cuivre | mg/kg | 5,5 | 5,3 | 4,6 |
| zinc | mg/kg | 27,1 | 32,4 | 48,3 |
| sélénium | μg/kg | 181,4 | 188,4 | 209,1 |

Pour la constitution de ces régimes, c'est la formulation des biscuits aux pépites de chocolat qui a été retenue.

Les biscuits utilisés ne comprenaient cependant pas de pépites de chocolat, pour des problèmes d'appétence. Ces biscuits ont été broyés puis mélangés aux autres ingrédients dans les proportions voulues, les mélanges en poudre ainsi obtenus étant enfin reconstitués en petits biscuits, donnés à consommer aux souris.

**Expérimentation 2 : Évaluation de l'effet de biscuits selon l'invention sur des paramètres de la fonction immunitaire, de la production de ROS et du stress oxydatif chez des souris âgées.**

**Animaux et groupes expérimentaux :**

21 souris femelles OF1 Swiss (Mus musculus) (Harlan Ibérica Spain) âgées de 18 mois ont été sélectionnées pour cette étude. Les souris ont été divisées en deux groupes :

➢ 10 souris contrôles alimentées ad libitum avec un régime standard (AIN-93)
➢ 11 souris supplémentés, alimentées ad libitum avec un régime contenant 80 % du régime standard (AIN-93) et 20 % de biscuits conformes à l'invention

**Echantillons biologiques et marqueurs :**

Des échantillons de leucocytes du péritoine ont été obtenus, à 5 et 15 semaines dès le début de la supplémentation, sans sacrifier les animaux d'après la technique décrite par De la Fuente et al (référence précitée). Les marqueurs utilisés pour évaluer la fonction immunitaire sont les suivants :

➢ Adhérence, chimiotaxie et phagocytose de macrophages : méthode d'après De la Fuente et al. (de la FM, Del Rio M, Ferrandez MD, Hernanz A. "Modulation of phagocytic function in murine peritoneal macrophages by bombesin, gastrin-releasing peptide and neuromedin", C. Immunology, 1991;205-11)

➢ Adhérence et prolifération de lymphocytes : méthode décrite par Del Rio et al. (Del Rio M, Hernanz A, de la FM. "Bombesin, gastrin-releasing peptide, and neuromedin C modulate murine lymphocyte proliferation through adherent accessory cells and activate protein kinase C". Peptides 1994;15:15-22)

➢ Cytotoxicité des Natural Killer (NK) cells : méthode décrite par Ferrandez et al. (Ferrandez MD, de la FM. "Effects of age, sex and physical exercise on the phagocytic process of murine peritoneal macrophages". Acta physiologica Scandinavica 1999;166:47-53)

➢ Production de cytokines par les leucocytes TNF-α (Victor VM, de la FM. "Changes in the superoxide production and other macrophage functions could be related to the mortality of mice with endotoxin-induced oxidative stress", Physiological research 2003;52:101-10), et IL-2 (Guayerbas N, Puerto M, Victor VM, Miquel J, de la FM. "Leukocyte function and life span in a murine model of premature immunosenescence", Expérimental gerontology 2002 ; 37: 249-56).

Les marqueurs pour évaluer la production des espèces réactives de l'oxygène (ROS) sont :

➢ Production d'anion superoxyde ($O_2^o$) : méthode décrite dans Victor et al. (Victor VM, Guayerbas N, Garrote D, Del Rio M, de la FM. "Modulation of murine macrophage function by N-acetylcysteine in a model of endotoxic shock", BioFactors,1999;10:347-57).

➢ Production de peroxyde d'hydrogène ($H_2O_2$) et d'oxyde nitrique (NO) (Molina HF, Hernanz A, de la FM, Guaza C. "N-Acetyl-cysteine inhibition of encephalomyelitis Theiler's virus- induced nitric oxide and tumour necrosis factor-alpha production by murine astrocyte cultures", BioFactors 1999;187-93).

L'activité des enzymes antioxydantes a également été évaluée : superoxyde dismutase (SOD), Glutathion peroxydase (GPX) et Catalase (CAT) ainsi que le système glutathion d'après la description dans Victor et al. (Victor VM, de la FM. "Changes in the superoxide production and other macrophage functions could be related to the mortality of mice with endotoxin-induced oxidative stress", Physiological research, 2003;52:101-10).

Afin de déterminer les dégâts oxydatifs de l'ADN le rapport 8-hydroxydeoxyguanosine/2 deoxyguanosine (8OH$_2$DG/ 2DG) a été mesuré, d'après la technique décrite dans Barja & Herrero (Barja G, Herrero A. "Oxidative damage to mitochondrial DNA is inversely related to maximum life span in the heart and brain of mammals", The FASEB journal, 2000;14:312-8).

**Analyse statistique**

Toutes les valeurs sont exprimées en moyenne ± écart type. Le test Kolmogorov-Smimov and Levene a été utilisé pour déterminer la normalité des données et l'homogénéité des variances. Les analyses entre groupes supplémentés et groupes control ont été réalisés par t-Student et ANOVA. La significativité statistique est exprimée en : ¤ p<0.05, ¤¤ p<0.01 et ◊◊◊ p<0.001 pour les différences entre les groupes contrôles des NPAM et PAM et en * p<0.05, **p<0.01 et *** p<0.001 pour les différences entre groupes supplémentés et leurs correspondants contrôles NPAM et PAM.

**4.2. Résultats**

**Expérimentation 1**

L'information présentée dans les tableaux 13 et 14 correspond uniquement aux modifications statistiquement significatives de différents marqueurs après la supplémentation.

---

**Codes :**

NPAM = Non-Prematurely Aging Mice

PAM = Prematurely Aging Mice

∩ = Diminution du paramètre provoquée par le régime avec 5 % de biscuits selon l'invention

Λ = Diminution du paramètre provoquée par le régime avec 20 % de biscuits selon l'invention

∪ = Augmentation du paramètre après supplémentation avec le régime à 5 % de biscuits selon l'invention

V = Augmentation du paramètre après supplémentation avec le régime à 20 % de biscuits selon l'invention

⟩ = Paramètre qui augmente au cours de l'âge

Suite de tableau

| Codes : |
| --- |
| ¬ = Paramètre qui diminue au cours de l'âge |
| NM = Non mesuré |

## A. Effet des biscuits sur la fonction immunitaire des souris adultes

L'ensemble de paramètres modifiés au cours du vieillissement sont restaurés après supplémentation avec des biscuits selon l'invention. Les effets sur les macrophages sont mis en évidence dès 5 semaines avec les deux types de régime. En revanche, pour les lymphocytes et les interleukines la différence à 5 semaines de supplémentation n'est évidente qu'avec le régime contenant 20 % de biscuits (tableau ci-dessous).

Tableau 13 : Effet d'une supplémentation pendant 5 et 15 semaines avec 5% et 20% de biscuits conformes à l'invention sur la fonction immunitaire des souris adultes prématurément vieillies

| Paramètres | Population | Supplémentation de 5 semaines | Supplémentation de 15 semaines | Changement au cours de l'age |
| --- | --- | --- | --- | --- |
| Index d'dhérence de macrophages | NPAM | | | ⟩ |
| | PAM | ∩∧ | ∩∧ | |
| Index de chemiotaxie des macrophages | NPAM | ∨ | ∨ | ¬ |
| | PAM | ∪∨ | ∨ | |
| Index de phagocytose | NPAM | | ∪∨ | ¬ |
| | PAM | ∪∨ | ∪∨ | |
| Index d'efficacité de phagocytose | NPAM | | | ¬ |
| | PAM | ∪∨ | ∪∨ | |
| Index d'adhérence de lymphocytes | NPAM | | | ⟩ |
| | PAM | ∩∧ | ∩∧ | |
| Index de chemiotaxie des lymphocytes | NPAM | | | ¬ |
| | PAM | ∪∨ | ∪∨ | |
| Lymphoprolifération en réponse à la Con-A | NPAM | | | ¬ |
| | PAM | ∨ | ∨ | |
| Lymphoprolifération en réponse à la LPS | NPAM | | | ¬ |
| | PAM | ∨ | | |
| Activité des NK cells | NPAM | | | ¬ |
| | PAM | | ∪∧ | |
| Production de TNFα | NPAM | ∧ | ∩∧ | ⟩ |
| | PAM | ∧ | ∩∧ | |
| Production de IL-2 | NPAM | | | ¬ |
| | PAM | ∨ | ∨ | |

Pour rappel, l'ensemble de changements de ces fonctions au cours de l'âge est présenté dans la dernière colonne du tableau.

## B. Effet des biscuits sur la production de ROS et les antioxydants endogènes des souris adultes

La supplémentation avec des biscuits conformes à l'invention ne diminue pas la production intracellulaire des ROS mais diminue leur niveau à l'extérieur de la cellule. L'activité des enzymes antioxydantes est augmentée après supplémentation et ceci de façon plus évidente chez les souris prématurément vieillies (tableau ci-dessous).

**Tableau 14 :** Effet d'une supplémentation pendant 5 et 15 semaines avec 5% et 20% de biscuits conformes à l'invention sur la production de ROS et les niveaux d'antioxydants endogènes des souris <u>adultes</u>

| Paramètres | Population | 5 semaines | 15 semaines |
|---|---|---|---|
| **Production basale de $H_2O_2$ en réponse au FMLP** | NPAM | | |
| | PAM | | ⌣∨ |
| **Production intracellulaire d'anion superoxyde en réponse au FMLP** | NPAM | | |
| | PAM | | ∨ |
| **Niveau extracellulaire basal d'anion superoxyde** | NPAM | | |
| | PAM | ⌒∧ | ⌒∧ |
| **Niveau extracellulaire d'anion superoxyde en réponse au FMLP** | NPAM | | ⌒∧ |
| | PAM | ⌒∧ | ⌒∧ |
| **Production de NO** | NPAM | NM | ⌒∧ |
| | PAM | NM | ⌒∧ |
| **Activité de la Superoxyde dismutase** | NPAM | | ∨ |
| | PAM | ⌣∨ | ⌣∨ |
| **Activité de la Glutathion peroxydase** | NPAM | | |
| | PAM | ∨ | ⌣∨ |
| **Activité de la Catalase** | NPAM | ⌣∨ | NM |
| | PAM | ⌣∨ | NM |
| **Concentration en** | NPAM | NM | |
| **Glutathion total** | PAM | NM | ⌣∨ |
| **GSSG/GSH** | NPAM | ⌒∧ | NM |
| | PAM | ⌒∧ | NM |

## C. Effet des biscuits sur les dégâts oxydatifs de l'ADN des souris adultes

Le niveau de bases de l'ADN oxydées est plus élevé chez les souris prématurément vieillies. Cependant cette différence ne devient significative qu'à 15 semaines dès le début de l'étude (voir tableau ci-dessous).

Après supplémentation, le niveau d'oxydation de l'ADN diminue avec les deux régimes (5 % et 20 % de biscuits conformes à l'invention). La diminution est mise en évidence dès 5 semaines chez les souris non-prématurément vieillies ; en revanche chez les souris prématurément vieillies, seule la supplémentation avec 20 % de biscuits selon l'invention montre un effet significatif. A 15 semaines, l'effet est constaté pour les deux types de régime.

**Tableau 15 :** Effet d'une supplémentation pendant 5 et 15 semaines avec 5 et 20 % des biscuits selon l'invention sur les dégâts oxydatifs de l'ADN ($8OH_2DG/2DG$) des leucocytes des souris adultes

| Temps de supplémentation | NPAM | | | PAM | | |
| | Contrôles | Biscuit à 5% | Biscuit à 20% | Contrôles | Biscuit à 5% | Biscuit à 20% |
|---|---|---|---|---|---|---|
| 5 semaines | $24.9 \pm 6.6$ | $14.3 \pm 2.7$** | $15.5 \pm 2.5$* | $38.9 \pm 12.4$ | $27.8 \pm 3.4$ | $18.7 \pm 4.7$** |
| 15 semaines | $29.5 \pm 52$ | $19.6 \pm 4.3$** | $15.7 \pm 4.2$*** | $46.0 \pm 6.9$¤¤ | $19.9 \pm 9$*** | $163 \pm 3.7$*** |

**Expérimentation 2**

L'information présentée dans les tableaux suivants correspond uniquement aux modifications statistiquement significatives de différents marqueurs après la supplémentation.

**A. Effet des biscuits sur la fonction immunitaire des souris âgées**

L'ensemble de marqueurs de la fonction immunitaire mesurés sont restaurés après supplémentation avec 20 % des biscuits selon l'invention. Pour la plupart des marqueurs, les effets sont mis en évidence dès 5 semaines, seule la lymphoprolifération en réponse à la LPS commence à augmenter à 15 semaines (tableau ci-dessous).

**Tableau 16 :** Effet d'une supplémentation pendant 5 et 15 semaines avec un régime contenant 20 % de biscuits selon l'invention sur la fonction immunitaire des souris âgées (18 mois)

| Paramètres | 5 semaines | 15 semaines | Changement au cours de l'âge |
|---|---|---|---|
| Adhérence de macrophages | ∧ | ∧ | 〉 |
| Chemiotaxie des macrophages | ∨ | ∨ | ¬ |
| Index de phagocytose | ∨ | ∨ | ¬ |
| Index efficacité de phagocytose | ∨ | ∨ | ¬ |
| Adhérence de lymphocytes | ∧ | ∧ | 〉 |
| Chemiotaxie des lymphocytes | ∨ | ∨ | ¬ |
| Lymphoprolifération en réponse à la Con-A | ∨ | | ¬ |
| Lymphoprolifération en réponse à la LPS | | ∨ | ¬ |
| NK cells activité | ∨ | ∨ | ¬ |
| Production leucocytaire de PGE$_2$ | NM | ∧ | 〉 |
| Production leucocytaire de TNF$\alpha$ | ∧ | ∧ | 〉 |
| Production leucocytaire d'IL-2 | ∨ | ∨ | ¬ |

**B. Effet des biscuits sur la production de ROS et les antioxydants endogènes des souris âgées**

La supplémentation avec 20 % des biscuits selon l'invention ne modifie pas la production intracellulaire de $H_2O_2$ et diminue celle d'anion superoxyde. En revanche, cette dernière augmente lors d'une stimulation, tout en préservant le niveau extracellulaire. De même, l'activité des enzymes antioxydantes, ainsi que la concentration de glutathion réduit, sont plus élevées après supplémentation. Enfin le niveau de stress oxydatif évalué par le rapport GSSG/GSH diminue (c.f. tableau ci-dessous).

**Tableau 17 :** Effet d'une supplémentation pendant 5 et 15 semaines avec 20 % des biscuits selon l'invention sur la production leucocytaire et le niveau extracellulaire de ROS chez des souris âgées

| Paramètres | 5 semaines | 15 semaines |
|---|---|---|
| Production basale de $H_2O_2$ (Unités de fluorescence) | | |
| Production de $H_2O_2$ en réponse au FMLP (unités de fluorescence) | | |
| Production intracellulaire d'anion superoxyde en réponse au FMLP | ∨ | ∨ |
| Niveau basal extracellulaire d'anion superoxyde | ¬ | ¬ |
| Niveau extracellulaire d'anion superoxyde en résponse au FMLP | ¬ | ¬ |
| Production de NO | NM | ¬ |
| Activité de la Superoxyde dismutase | ∨ | ∨ |
| Activité de la Catalase | ∨ | ∨ |
| Activité de la Glutathion peroxydase | ∨ | ∨ |

Suite de tableau

| Paramètres | 5 semaines | 15 semaines |
|---|---|---|
| Concentration en Glutathion total | | ∨ |
| Concentration en Glutathion réduit | ∨ | ∨ |
| Concentration en Glutathion oxydé | | ¬ |
| GSSG/GSH | ¬ | ¬ |

## C. Effet sur les dégâts oxydatifs de l'ADN des souris âgées

Le niveau de bases de l'ADN oxydées diminue après supplémentation avec le régime contenant 20 % des biscuits enrichis en antioxydants et ceci dès 5 semaines (voir tableau ci-dessous).

**Tableau 18** : Effet d'une supplémentation pendant 5 et 15 semaines avec des biscuits selon l'invention à 20 % du régime sur les dégâts oxydatifs de l'ADN (8OH$_2$DG/2DG) des leucocytes des souris âgées

| Temps de supplémentation | Contrôles | Supplémentées avec 20 % de biscuits conformes à l'invention |
|---|---|---|
| 5 semaines | 66 ± 17 | 33 ± 13** |
| 15 semaines | 120 ± 32 | 62 ± 16*** |

## CONCLUSIONS DE CES EXPÉRIMENTATIONS

**1. Les souris prématurément vieillies (PAM) présentent un déclin de la fonction immunitaire.**
D'après les résultats obtenus, la plupart des paramètres de la fonction immunitaire mesurés chez les deux groupes contrôles montrent des valeurs inférieures chez les souris prématurément vieillies (PAM) par rapport aux souris non-prématurément vieillies (NPAM), alors que les deux groupes ont le même âge chronologique. Ces données confirment d'une part le déclin de la fonction immunitaire qui accompagne le vieillissement, et d'autre part l'intérêt du modèle de vieillissement adopté

**2. Une supplémentation avec des biscuits conformes à l'invention permet de restaurer la perte d'homéostasie de la fonction immunitaire qui accompagne le vieillissement.**

**Chez les souris adultes prématurément vieillies :**

➢ L'effet est plus important en fonction de la **quantité** de biscuits intégrés dans le régime pour la chimiotaxie des macrophages, la lymphoprolifération et la production de cytokines.
➢ L'effet est accentué lorsque la durée de la supplémentation est plus importante pour la production du TNF-α, l'index de phagocytose et l'activité des NK cells.

**Chez les souris âgées :**

➢ L'effet est évident dès 5 semaines de supplémentation (20 % de biscuits selon l'invention).

**3. La supplémentation avec les biscuits conformes à l'invention améliore l'activité des lymphocytes et de macrophages au cours du vieillissement.**
Les meilleurs index d'adhérence, de phagocytose ainsi que de mobilité (des fonctions primaires et essentielles impliquées dans la réponse immunitaire et inflammatoire) qui sont retrouvés dans les lymphocytes et les macrophages des animaux supplémentés indiquent qu'ils ont des meilleures cellules phagocytaires pour se défendre contre des agents pathogènes et des lymphocytes dotés d'une meilleure capacité de migration pour retrouver les antigènes.

**4. La supplémentation avec des biscuits conformes à l'invention permet de restaurer la production d'in-**

**terleukine 2 (IL-2)** dont ont constate une diminution au cours du vieillissement. En effet, l'IL-2 est impliquée entre autres dans l'activation des macrophages, activation qui diminue au cours de l'âge.

**5. La supplémentation avec des biscuits selon l'invention induit également une diminution de la production du Tumor Necrosing Factor (TNF-α),** une cytokine pro-antiflammatoire dont l'augmentation est constatée au cours du vieillissement.

**6. La supplémentation avec des biscuits conformes à l'invention permet aux cellules phagocytaires d'avoir un meilleur contrôle des espèces réactives de l'oxygène.**
D'une part, le régime supplémenté maintient et même augmente la production des ROS à l'intérieur de la cellule, ce qui leur permet d'assurer une adéquate fonction phagocytaire. Et d'autre part, le niveau des ROS à l'extérieur de la cellule, qui augmente au cours du vieillissement, se retrouve diminué après supplémentation avec les biscuits, ce qui permettrait de prévenir le stress oxydatif et les potentiels dégâts oxydatifs des cellules.

➢ D'après les résultats obtenus, cette diminution de la « fuite » des ROS vers l'extérieur de la cellule peut être due à une amélioration de l'activité des enzymes antioxydantes superoxyde dismutase, glutathion peroxydase et catalase, qui a été constatée après supplémentation avec les biscuits selon l'invention.
➢ De plus, le niveau de glutathion total (le principal antioxydant endogène dont une diminution est constatée au cours du vieillissement), augmente après supplémentation avec lesdits biscuits.

**7. La supplémentation avec des biscuits conformes à l'invention prévient le stress oxydatif de leucocytes et diminue les dégâts oxydatifs de l'ADN.**
Une moindre fuite de ROS vers l'extérieur de la cellule accompagnée d'une amélioration du système antioxydant sont les garants d'une diminution du stress oxydatif (rapport GSSG/GSH diminué après supplémentation) ainsi que des moindres dégâts oxydatifs de la cellule. En effet, les résultats montrent que les souris supplémentées présentent moins de dommages oxydatifs de l'ADN (diminution du rapport $8OH_2DG/2DG'$)

**EXEMPLE 5 : Effet d'une supplémentation avec 20 % de biscuits conformes à l'invention sur des paramètres de la fonction immunitaire, du système antioxydant et du stress oxydatif chez des souris jeunes**

Dans l'étude de l'exemple 4 précédent, il a été montré que des supplémentations avec des biscuits conformes à l'invention à 5 et 20 % avaient un effet bénéfique sur la fonction immunitaire et le système antioxydant endogène des souris au cours du vieillissement.

Dans cette deuxième étude, il a été évalué l'effet d'une supplémentation pendant 5 semaines avec 20 % de biscuits selon l'invention sur les mêmes paramètres que précédemment, chez des souris jeunes, en utilisant le modèle de vieillissement prématuré.
Les biscuits, régimes et protocole de préparation utilisés sont identiques à ceux de l'exemple 4.

**5.1. Matériel et méthodes**

**Animaux :**

65 souris femelles OF1 Swiss (Mus musculus) âgées de 2 mois ont été incluses dans cette étude. Les souris ont été acclimatées, puis classées en groupes PAM (Prematurely Aging Mice) et NPAM (Non-Prematurely Aging Mice) en utilisant la même méthodologie que dans l'étude de l'exemple précédent.

**Classement des animaux et régimes administrés**

| 35 souris NPAM (Non-prematurely Aging Mice) | 15 souris alimentées ad libitum avec un régime control standard (AIN-93) | NPAM control |
|---|---|---|
| | 20 souris alimentées ad libitum avec un régime contenant 80 % du régime control (AIN-93) et 20 % de biscuits conformes à l'invention | NPAM 20 % |

Suite de tableau

| 30 souris PAM | 15 souris alimentées ad libitum avec un régime standard (AIN-93) | PAM control |
| | 15 souris alimentées ad libitum avec un régime contenant 80 % du régime control (AIN-93) et 20 % de biscuits selon l'invention | PAM 20 % |

**Echantillons biologiques et marqueurs :** IDEM que pour l'étude de l'exemple 4.

**Analyse statistique**

Toutes les valeurs sont exprimées en moyenne $\pm$ écart type. Le test Kolmogorov-Smimov and Levene a été utilisé pour déterminer la normalité des données et l'homogénéité des variances. Les analyses entre groupes supplémentés et groupes control ont été réalisés par t-Student et ANOVA. La significativité statistique est exprimée en : ¤ $p<0.05$, ¤¤¤ $p<0.01$ et ¤¤¤ $p<0.001$ pour les différences entre les groupes contrôles des NPAM et PAM et en * $p<0.05$, **$p<0.01$ et *** $p<0.001$ pour les différences entre groupes supplémentés et leurs correspondants contrôles NPAM et PAM.

**5.2. Résultats**

**A. Effet des biscuits sur les paramètres de la fonction immunitaire des souris jeunes**

Les résultats de l'étude (tableau 19) montrent que même chez des souris jeunes la fonction immunitaire diffère significativement entre les souris prématurément vieillies et les non-prématurément vieillies, toutes avec le même âge chronologique. La supplémentation avec des biscuits conformes à l'invention provoque chez les souris PAM une augmentation de l'index de chimiotaxie et de phagocytose des macrophages, ainsi que de la chimiotaxie et de la prolifération lymphocytaire. De plus, on constate une diminution de la production de TNF-$\alpha$ dans les deux groupes et une augmentation de l'IL-2 uniquement chez les souris prématurément vieillies. La supplémentation induit également une augmentation de la cytotoxicité des NK cells chez les deux groupes.

**Tableau 19 :** Effet d'une supplémentation pendant 5 semaines avec des biscuits conformes à l'invention à 20 % du régime sur la fonction immunitaire chez de souris jeunes

| Cellules | Paramètre | NPAM | | PAM | |
| | | Contrôles | Biscuits à 20% | Contrôles | Biscuits à 20% |
|---|---|---|---|---|---|
| Macrophages | Index d'adhérence | 34 ± 8 | 33 ± 8 | 43 ± 5 | 39 ± 8 |
| | Index de chimiotaxie | 516 ± 82 | 525 ± 108* | 221 ± 60¤¤¤ | 407 ± 86*** |
| | Index de phagocytose | 142 ± 47 | 165 ± 34 | 115 ± 27 | 220 ± 55*** |
| | Efficacité de phagocytose (#macrophages en phagocytose /100 macrophages) | 37 ± 9 | 48 ± 14 | 34 ± 5 | 41 ± 10 |
| Lymphocytes | Index d'adhérence | 36 ± 7 | 35 ± 6 | 56 ± 6 ¤¤¤ | 44 ± 12 |
| | Index de chimiotaxie | 1168 ± 202 | 1080 ± 217 | 633 ± 141 ¤¤¤ | 791 ± 246* |
| | % de prolifération en réponse au LPS | 306 ± 33 | 277 ± 31 | 203 ± 40¤¤¤ | 387 ± 30*** |
| | % de prolifération en réponse à Con A | 448 ± 95 | 417 ± 59 | 325 v 51¤¤ | 900 ± 156*** |

Suite de tableau

| Cellules | Paramètre | NPAM | | PAM | |
|---|---|---|---|---|---|
| | | Contrôles | Biscuits à 20% | Contrôles | Biscuits à 20% |
| Leucocytes | Concentration en PGE$_2$ des leucocytes stimulées avec LPS (ng/ml) | 25 ± 6 | 25 ± 7 | 32 ± 7¤ | 28 ± 5 |
| | Production de TNF-$\alpha$ de leucocytes stimulés avec LPS (pg/ml) | 105 ± 25 | 63 ± 23** | 137 ± 33¤ | 79 ± 24*** |
| | Production de IL-2 des leucocytes stimulés avec Con A (pg/ml) | 118 ± 30 | 101 ± 16 | 73 ± 8¤¤¤ | 135 ± 30** |
| NK cells | % de lysis | 48 ± 6 | 56 ± 5** | 26 ± 7¤¤¤ | 51 ± 7*** |

## B. Effet de la supplémentation avec des biscuits conformes à l'invention sur la production de ROS et le système antioxydant endogène des souris jeunes

L'ensemble des données sur la production de ROS est présenté dans le tableau 20. Les résultats montrent que la production leucocytaire de H$_2$O$_2$ ainsi que d'anion superoxyde est plus élevée chez les souris prématurément vieillies. La supplémentation avec des biscuits conformes à l'invention a des effets contradictoires sur la production de ROS lors de la stimulation leucocytaire avec le FMLP.

Tableau 20 : Effet d'une supplémentation pendant 5 semaines avec des biscuits selon l'invention à 20 % du régime sur la production leucocytaire des espèces réactives de l'oxygène chez des souris jeunes

| Paramètre | NPAM | | PAM | |
|---|---|---|---|---|
| | Contrôles | Biscuits à 20% | Contrôles | Biscuits à 20% |
| Production basale intracellulaire de H$_2$O$_2$ (Unités de fluorescence) | 5253 ± 1332 | 7719 ± 1802** | 9615 ± 2328¤¤¤ | 4960 ± 1355*** |
| Production intracellulaire de H$_2$O$_2$ en réponse au FMLP (Unités de fluorescence) | 9871 ± 2490 | 13877 ± 5117* | 12660 ± 2228¤ | 8370 ± 3025** |
| Production intracellulaire d'anion superoxyde en réponse au FMLP (nmol/10$^6$ cells) | 41 ± 7 | 49 ± 12 | 31 ± 8¤ | 59 ± 7*** |
| Production de NO ($\mu$M) en réponse au LPS (10 mg/ml) | 39 ± 9 | 42 ± 10 | 52 ± 16 | 52 ± 11 |

Le tableau 21 présente les résultats concernant le niveau d'antioxydants endogènes. On observe un plus faible niveau d'antioxydants chez les souris prématurément vieillies comparativement à celles non-prématurément vieillies. La supplémentation avec des biscuits conformes à l'invention induit une augmentation de l'ensemble de marqueurs.

**Tableau 21 :** Effet d'une supplémentation pendant 5 semaines avec des biscuits selon l'invention à 20 % du régime sur le système antioxydant endogène des leucocytes des souris jeunes

| Paramètre | NPAM | | PAM | |
|---|---|---|---|---|
| | Contrôles | Biscuits à 20% | Contrôles | Biscuits à 20% |
| Activité de la superoxide dismutase (SOD) (U/mg prot)(x$10^3$) | 3014 ± 0.55 | 3.29 ± 0.36 | 1.72 ± 0.34¤¤¤ | 2.6 ± 0.45** |
| Activité de la Catalase (CAT) (U/mg prot) (x$10^3$) | 0.24 ± 0.08 | 0.45 ± 0.1*** | 0.16 ± 0.04¤ | 0.51 ± 0.14*** |
| Activité de la glutation reductase (GR) (U/mg prot) | 0.62 ± 0.11 | 0.64 ± 0.17 | 0.38 ± 0.08¤¤¤ | 0.4 ± 0.09 |
| Concentration de glutathion total (nmol/ $10^6$ cells) | 133 ± 22 | 133 ± 14 | 85 ± 10¤¤¤ | 108 ± 19** |
| Concentration de glutathion réduit (nmol/ $10^6$ cells) | 132.5 ± 21.6 | 131.6 ± 14.9 | 84.5 ± 9.5¤¤¤ | 108.1 ± 19.1** |
| Rapport GSSG/GSH(x$10^{-3}$) | 1.65 ± 0.9 | 1.87 ± 0.7 | 3.93 ± 1.0¤¤¤ | 2.61 ± 1.1* |

**CONCLUSIONS DE CES EXPÉRIMENTATIONS**

1. Les données recueillies suggèrent que la perte d'homéostasie de la fonction immunitaire commence même avant l'age adulte, car on constate même chez les souris jeunes prématurément vieillies un déclin de cette fonction.
2. Une supplémentation avec 20 % de biscuits conformes à l'invention pendant 5 semaines permet de restaurer certains marqueurs de la fonction immunitaire qui diminuent au cours du vieillissement. En effet, la chimiotaxie et la phagocytose des macrophages, la lymphoprolifération et la cytotoxicité des NK cells sont augmentées après supplémentation.
3. La supplémentation avec des biscuits conformes à l'invention permet de restaurer la production de cytokines altérée au cours du vieillissement. Une augmentation de l'IL-2 et une diminution du TNF-α sont constatées après supplémentation.
4. La supplémentation avec les biscuits conformes à l'invention augmente l'activité des enzymes antioxydantes et le niveau de glutathion total et diminue le stress oxydatif de leucocytes des souris prématurément vieillies.

**Revendications**

1. Produit de biscuiterie permettant d'optimiser les apports nutritionnels en micro-nutriments anti-oxydants et par ce biais d'améliorer la prévention nutritionnelle des effets délétères liés au stress oxydatif et du déclin des fonctions cognitive et immunitaire, **caractérisé par le fait qu'**il comprend, les quantités étant exprimées par rapport à 100 grammes de produit fini :

   - une quantité supérieure ou égale à 5 g, de préférence à 5,5 g, et plus préférentiellement encore à 6 g de farine complète de blé,
   - une quantité supérieure ou égale à 5 g, de préférence à 5,5 g, et plus préférentiellement encore à 6 g de germe de blé,
   - de 70 à 200, de préférence de 75 à 175, et plus préférentiellement encore de 85 à 135 mg de vitamine C,
   - de 8 à 40, de préférence de 10 à 30, et plus préférentiellement encore de 14 à 22 mg de vitamine E,
   - de 1,5 à 8 mg, de préférence de 2 à 6, et plus préférentiellement encore de 2,6 à 4,8 mg de β-carotène,
   - de 30 à 100, de préférence de 40 à 80, et plus préférentiellement encore de 44 à 82 μg de sélénium,
   - et de 4 à 25, de préférence de 6 à 20, et plus préférentiellement encore de 7 à 15 mg de zinc.

2. Produit de biscuiterie selon la revendication 1, **caractérisé par le fait qu'**il se présente sous la forme d'un produit sec ou d'un produit aux fruits.

3. Produit de biscuiterie selon l'une ou l'autre des revendications 1 et 2, **caractérisé par le fait qu'**il comporte une teneur en matières grasses choisie de façon à ce que l'apport énergétique desdites matières grasses soit inférieur à 35 %, de préférence compris entre 25 et 35 % de l'apport énergétique total du produit.

4. Produit de biscuiterie selon la revendication 3, **caractérisé par le fait qu'**il comporte une teneur en matières grasses choisie de façon à ce que leur apport énergétique soit compris entre 30 et 35 % de l'apport énergétique total du produit pour les produits secs, et entre 25 et 30 % de l'apport énergétique total du produit pour les produits aux fruits.

5. Produit de biscuiterie selon l'une quelconque des revendications 1 à 4, **caractérisé par le fait qu'**il comprend une quantité de fibres supérieure ou égale à 6 g, de préférence supérieure à 6.5 g et plus préférentiellement encore supérieure à 7 g pour 100 g de produit fini.

6. Produit de biscuiterie selon l'une quelconque des revendications 1 à 5, **caractérisé par le fait qu'**il comprend une teneur en céréales supérieure ou égale à 50 % pour les produits secs et supérieure ou égale à 30 % pour les produits aux fruits, ces pourcentages étant exprimés en poids sur le produit fini.

7. Produit de biscuiterie selon l'une quelconque des revendications 1 à 6, **caractérisé par le fait que** :

   - les acides gras saturés représentent une proportion inférieure ou égale à 30%,
   - les acides gras mono-insaturés représentent une proportion supérieure ou égale à 50 %,
   - les acides gras poly-insaturés représentent une proportion inférieure ou égale à 20 %

   ces pourcentages étant exprimés en poids par rapport au total des lipides présents dans le produit fini.

8. Produit de biscuiterie selon l'une quelconque des revendications 1 à 7, **caractérisé par le fait que** le ratio amidon sur sucre est égal ou supérieur à 1 pour les produits secs, et supérieur ou égal à 0,45 pour les produits aux fruits.

9. Procédé de fabrication d'un produit de biscuiterie selon l'une quelconque des revendications 1 à 8, comprenant les étapes suivantes :

   - sélection des ingrédients,
   - mélange desdits ingrédients, en une ou plusieurs opérations, notamment dans un pétrin, jusqu'à obtention d'une pâte de texture et de viscosité adaptées,
   - façonnage du produit, notamment par moulage à la rotative, découpe au rotodécoupoir après laminage, extrusion, co-extrusion, coulage de la pâte sur bandes pleines ou dans des moules de cuisson,
   - cuisson,
   - refroidissement, et
   - emballage,

   **caractérisé par le fait que** l'on fait comprendre, ou que l'on ajoute auxdits ingrédients, de la farine complète de blé, du germe de blé, de la vitamine C, de la vitamine E, du β-carotène, du sélénium et du zinc.

10. Un produit de biscuiterie selon l'une quelconque des revendications 1 à 8, ou obtenu selon le procédé conforme à la revendication 9, pour son utilisation à titre de médicament chez l'homme.

11. Utilisation d'un produit de biscuiterie selon l'une quelconque des revendications 1 à 8, ou obtenu selon le procédé conforme à la revendication 9, pour l'obtention d'un médicament destiné à améliorer la prévention nutritionnelle des effets délétères liés au stress oxydatif chez l'homme

## Claims

1. Biscuit product allowing the optimisation of the nutritional intake of antioxidant micronutrients and thereby the improvement of the nutritional prevention of the deleterious effects associated with oxidative stress and of the decline in the cognitive and immune functions, **characterised by** the fact that it contains, the quantities being expressed per 100 grams of finished product:

   - a quantity greater than or equal to 5 g, preferably 5.5 g, and even more preferably 6 g of wholewheat flour,
   - a quantity greater than or equal to 5 g, preferably 5.5 g, and even more preferably, 6 g of wheatgerm,

- 70 to 200, preferably 75 to 175, and even more preferably 85 to 135 mg of vitamin C,
- 8 to 40, preferably 10 to 30, and even more preferably 14 to 22 mg of vitamin E,
- 1.5 to 8 mg, preferably 2 to 6, and even more preferably 2.6 to 4.8 mg of beta carotene,
- 30 to 100, preferably 40 to 80, and even more preferably 44 to 82 µg of selenium,
- and 4 to 25, preferably 6 to 20, and even more preferably 7 to 15 mg of zinc.

**2.** Biscuit product according to claim 1, **characterised by** the fact that it is in the form of a dry product or a product with fruit.

**3.** Biscuit product according to either of claims 1 and 2, **characterised by** the fact that it has a fat content selected so that the energy input of said fats is less than 35% and preferably between 25 and 35% of the total energy input of the product.

**4.** Biscuit product according to claim 3, **characterised by** the fact that it has a fat content selected so that its fat input is between 30 and 35% of the total energy input of the product for the dry products, and between 25 and 30% of the total energy input of the product for the products with fruit.

**5.** Biscuit product according to any of claims 1 to 4, **characterised by** the fact that it contains a quantity of fibres greater than or equal to 6 g, preferably greater than 6.5 g and even more preferably greater than 7 g per 100 g of finished product.

**6.** Biscuit product according to any of claims 1 to 5, **characterised by** the fact that it has a cereal content greater than or equal to 50% for the dry products and greater than or equal to 30% for the products with fruit, said percentages being expressed as weight per finished product.

**7.** Biscuit product according to any of claims 1 to 6, **characterised by** the fact that:

- saturated fatty acids represent a proportion less than or equal to 30%,
- monounsaturated fatty acids represent a proportion greater than or equal to 50%
- polyunsaturated fatty acids represent a proportion less than or equal to 20%,

said percentages being expressed as weight in relation to the total lipids present in the finished product.

**8.** Biscuit product according to any of claims 1 to 7, **characterised by** the fact that the ratio of starch to sugar is greater than or equal to 1 for the dry products and greater than or equal to 0.45 for the products with fruit.

**9.** Process for manufacturing a biscuit product according to any of claims 1 to 8, comprising the following steps:

- Selecting ingredients,
- Mixing said ingredients, in one or more operations, particularly in a kneading machine, to obtain a paste of suitable texture and viscosity,
- Shaping the product, particularly by rotational moulding, cutting with a rotary cutter after rolling, extrusion, co-extrusion, pouring the paste onto solid belts or into baking moulds,
- Baking
- Cooling and
- Packaging,

**characterised by** the fact that wholewheat flour, wheatgerm, vitamin C, vitamin E, beta carotene, selenium and zinc are incorporated or are added to said ingredients.

**10.** A biscuit product according to any of claims 1 to 8 or obtained by the process according to claim 9, for use as human medication.

**11.** Use of a biscuit product according to any of claims 1 to 8 or obtained by the process according to claim 9, for the manufacture of a medicament for improving nutritional prevention of the deleterious effects associated with oxidative stress in humans.

**Patentansprüche**

1. Produkt der Kekslierstellung, das es ermöglicht, die nutritionale Versorgung an Antioxidans-Mikronährstoffen zu optimieren und auf diesem Umweg, die nutrionale Prävention der gefährlichen Wirkungen, die mit oxidativem Streß verbunden sind, und des Nachlassens der kognitiven und Immunfunktionen zu verbessern, **dadurch gekennzeichnet, daß** es

   - eine Menge von über oder gleich 5 g, vorzugsweise 5,5 g und noch bevorzugter 6 g, Weizenvollkornmehl,
   - eine Menge von über oder gleich 5 g, vorzugsweise 5,5 g und noch bevorzugter 6 g weizenkeime,
   - 70 bis 200 mg, vorzugsweise 75 bis 175 mg, noch bevorzugter 85 bis 135 mg Vitamin C,
   - 8 bis 40 mg, vorzugsweise 10 bis 30 mg und noch bevorzugter 14 bis 22 mg Vitamin E,
   - 1,5 bis 8 mg, vorzugsweise 2 bis 6 mg und noch bevorzugter 2,6 bis 4,8 mg $\beta$-Carotin,
   - 30 bis 100 $\mu$g, vorzugsweise 40 bis 80 und noch bevorzugter 44 bis 82 $\mu$g Selen, und
   - 4 bis 25 mg, vorzugsweise 6 bis 20 mg und noch bevorzugter 7 bis 15 mg Zink umfaßt, wobei die Mengen bezogen auf 100 g Endprodukt angegeben sind.

2. Produkt der Keksherstellung nach Anspruch 1, **dadurch gekennzeichnet, daß** es in Form eines trockenen Produktes oder in Form eines Produktes mit Früchten vorliegt.

3. Produkt der Keksherstellung nach dem einen oder dem anderen der Ansprüche 1 und 2, **dadurch gekennzeichnet, daß** es einen Gehalt an Fetten enthält, der so gewählt ist, daß der Energiegehalt unter 35 %, vorzugsweise zwischen 25 und 35 % des Gesamtenergiegehalts des Produktes liegt

4. Produkt der Keksherstellung nach Anspruch 3, **dadurch gekennzeichnet, daß** es einen Gehalt an Fetten enthält, der so gewählt ist, daß ihr Energiegehalt zwischen 30 und 35 % des Gesamtenergiegehalts des Produktes für die trockenen Produkte und zwischen 25 und 30 % des Gesamtenergiegehalts des Produktes für die Produkte mit Früchten liegt.

5. Produkt der Keksherstellung nach einem der Ansprüche 1 bis 4, **dadurch gekennzeichnet, daß** es eine Menge von über oder gleich 6 g, vorzugsweise über 6,5 g und noch bevorzugter über 7 g an Fasern pro 100 g Endprodukt enthält.

6. Produkt der Keksherstellung nach einem der Ansprüche 1 bis 5, **dadurch gekennzeichnet, daß** es einen Gehalt an Getreide von über oder gleich 50 % für die trockenen Produkte und über oder gleich 30 % für die Produkte mit Früchten enthält, wobei diese Prozentangaben als Gewichtsprozent bezogen auf das Endprodukt angegeben sind.

7. Produkt der Keksherstellung nach einem der Ansprüche 1 bis 6, **dadurch gekennzeichnet, daß**

   - die gesättigten Fettsäuren einen Verhältnisanteil von unter oder gleich 30 % darstellen,
   - die einfach ungesättigten Fettsäuren einen Verhältnisanteil von über oder gleich 50 % darstellen,
   - die mehrfach ungesättigten Fettsäuren einen Verhältnisanteil von unter oder gleich 20 % darstellen,

   wobei die Prozentangaben als Gewichtsprozente bezogen auf die Gesamtheit der Lipide, die im Endprodukt vorliegen, ausgedrückt sind.

8. Produkt der Keksherstellung nach einem der Ansprüche 1 bis 7, **dadurch gekennzeichnet, daß** das Verhältnis von Stärke zu Zucker gleich oder über 1 für die trockenen Produkte ist und über oder gleich 0,45 für die Produkte mit Früchten ist.

9. Verfahren zur Herstellung eines Keksproduktes nach einem der Ansprüche 1 bis 8, umfassend die folgenden Stufen:

   - Auswahl der Ingredienzien,
   - Mischen der genannten Ingredienzien in einem oder mehreren Vorgängen, insbesondere in einer Knetvorrichtung bis zum Erhalt eines Teigs mit passender Textur und passender Viskosität,
   - Formung des Produktes, insbesondere durch Rotationsformen, Schneiden an einer Rotationsschneidevorrichtung nach Walzen, Extrusion, Co-Extrusion, Gießen des Teigs auf Vollbänder oder in Backformen,
   - Backen bzw. Braten,
   - Kühlen und

- Verpacken,

**dadurch gekennzeichnet, daß** man Weizenvollkornmehl, Weizenkeime, Vitamin C, Vitamin E, β-Carotin, Selen und Zink enthalten sein läßt oder den Ingredienzien zusetzt.

10. Produkt der Keksherstellung nach einem der Ansprüche 1 bis 8 oder erhalten nach dem Verfahren nach Anspruch 9 zur Verwendung als Medikament beim Menschen.

11. Verwendung eines Produkts der Keksherstellung nach einem der Ansprüche 1 bis 8 oder erhalten nach dem Verfahren nach Anspruch 9 zur Herstellung eines Medikaments, das dazu bestimmt ist, die nutrionale Prävention der gefährlichen Wirkungen, die mit oxidativem Streß verbunden sind, beim Menschen zu verbessern.

Figure 1 - Comparaison du poids en grammes des animaux après 3 mois de régime

Figure 2 - Effet du régime sur la teneur en Zn du tibia

Figure 3 - Effet du régime sur le taux de Se Plasmatique (µmol/L)

**Figure 4** - Comparaison de la vitamine C plasmatique entre les groupes

**Figure 5** - Comparaison du poids des organes au moment du sacrifice

**Figure 6** - Taux plasmatique en fer selon les trois régimes